# EUROPÄISCHE PATENTANMELDUNG

(11) **EP 4 458 120 A1**
(43) Veröffentlichungstag der Anmeldung: **06.11.2024**
(21) Anmeldenummer: 24172240.4
(22) Anmeldetag: 24.04.2024
(51) Int. Cl.: A01B 13/02, A01C 9/00

(54) **LANDWIRTSCHAFTLICHE MASCHINE MIT EINER FORMROLLE ZUM DAMMAUFBAU**

(30) Priorität: 24.04.2023 DE 102023110345
(71) Anmelder: Schöfer, Stefanie, 85104 Pförring (DE)
(72) Erfinder: Heiß, Andreas, 85104 Pförring (DE)
(74) Vertreter: Patentanwaltskanzlei WILHELM & BECK

(57) **Zusammenfassung**

Landwirtschaftliche Maschine mit einem Dammformer zum Aufbau eines Dammes aus Bodenmaterial. Der Dammformer weist eine um eine Drehachse drehbar gelagerte Formrolle aufweist, wobei die Formrolle mehrere entlang der Drehachse nebeneinander angeordnete Formelemente aufweist, wobei ein Formelement entlang der Drehachse ein erstes und ein zweites Seitenformelement aufweist, wobei ausgehend von einem ersten Randbereich des Formelementes ein radialer Durchmesser des ersten Seitenformelementes entlang der Drehachse in Richtung auf einen Mittenbereich des Formelementes wenigstens abschnittweise abnimmt, wobei ausgehend vom Mittenbereich entlang der Drehachse ein radialer Durchmesser des zweiten Seitenformelementes in Richtung auf einen zweiten Randbereich des Formelementes wenigstens abschnittweise zunimmt, wobei die seitlichen Randbereiche der Formelemente Laufstege darstellen, wobei die Laufstege ausgebildet sind, um wenigstens teilweise auf dem Boden aufzuliegen, wobei die Laufstege beim Bewegen der Maschine durch eine Zugmaschine durch die Auflage auf dem Boden die Formrolle um die Drehachse drehen, wobei die zwei Seitenformelemente eines Formelementes ausgebildet sind, um durch das Drehen der Formrolle und das Bewegen der Formrolle gegenüberliegende Seitenflächen eines Dammes aus Bodenmaterial zu formen.

## Beschreibung

Die Erfindung betrifft eine landwirtschaftliche Maschine mit einer Formrolle zum Dammaufbau.

Aus DE 10 2017 105 938 A1 ist eine landwirtschaftliche Maschine mit einem Traggestell, mit einer Pflanzeinrichtung, mit einem Vorratsbehälter und einer Entnahmeeinrichtung und mit einer Vorrichtung für einen Dammaufbau bekannt. Die Vorrichtung für den Dammaufbau weist beispielsweise zwei gegenüberliegende Seitenbleche auf, die konisch nach oben zulaufend angeordnet sind. Die zwei Seitenbleche formen die Seitenwände des Erddammes. Zudem kann ein oberes Formblech vorgesehen sein, das eine Oberseite des Erddammes glättet. Die Seitenbleche können auch in Form von Häufelscheiben ausgebildet sein, die drehbar an einem Traggestell gelagert sind.

Die Aufgabe der Erfindung besteht darin, eine verbesserte landwirtschaftliche Maschine zum Formen von Dämmen vor allem zum Pflanzen von Pflanzgut, Saatgut insbesondere zum Pflanzen von Kartoffeln in einen Erddamm bereitzustellen.

Die Aufgabe der Erfindung wird durch die landwirtschaftliche Maschine gemäß Patentanspruch 1 gelöst.

In den abhängigen Ansprüchen sind Weiterbildungen der landwirtschaftlichen Maschine angegeben.

Es wird eine landwirtschaftliche Maschine vorgeschlagen, die einen Dammformer aufweist. Es kann eine Pflanzeinrichtung mit einem Vorratsbehälter für Pflanzgut, insbesondere Kartoffeln, mit einem Traggestell befestigt vorgesehen sein.

Weiterhin kann eine Entnahmeeinrichtung zum Befördern des Pflanzgutes vom Vorratsbehälter auf einen Boden am Traggestell befestigt. Der Dammformer ist zum Aufbau eines Dammes aus Bodenmaterial ausgebildet. Beispielsweise kann mit dem Damm abgelegtes Pflanzgut, insbesondere Kartoffeln, mit Bodenmaterial bedeckt werden. Der Dammformer weist eine um eine Drehachse drehbar gelagerte Formrolle auf. Zwischen zwei Formelementen ist ein Laufsteg ausgebildet. Der Laufsteg ragt in radialer Richtung in Bezug auf die Drehachse über die Formelemente hinaus. Der Laufsteg kann eine Breite von beispielsweise 6 bis 14 mm, insbesondere 8 bis 10 mm aufweisen.

Das Formelement weist entlang der Drehachse ein erstes und ein zweites Seitenformelement auf. In einer Ausführung nimmt ausgehend von einem ersten Randbereich des Formelementes ein radialer Durchmesser des ersten Seitenformelementes entlang der Drehachse in Richtung auf einen Mittenbereich des Formelementes wenigstens abschnittsweise ab. Zudem nimmt ausgehend vom Mittenbereich des Formelementes entlang der Drehachse ein radialer Durchmesser des zweiten Seitenformelements in Richtung auf einen zweiten Randbereich des Formelementes wenigstens abschnittsweise zu. Die seitlichen Randbereiche der Formelemente stellen Laufstege dar. Die Laufstege sind ausgebildet, um abschnittsweise auf dem Boden aufzuliegen.

Zudem sind die Laufstege vorzugsweise ausgebildet, um beim Bewegen der Maschine durch eine Zugmaschine durch die Auflage auf dem Boden die Formrolle um die Drehachse zu drehen. Die Laufstege bilden Laufflächen. Die Laufstege können als austauschbare Verschleißteile ausgebildet sein. Durch die Laufstege, die einen wesentlichen Anteil der Auflagekraft der Formrolle auf dem Boden tragen, werden die Formelemente gegen übermäßige Abnutzung geschützt. Durch die austauschbaren Laufstege wird die Gebrauchsleistung der Formrolle deutlich verlängert.

Die Zugmaschine kann die Maschine ziehen oder schieben. Zudem sind die zwei Seitenformelemente eines Formelementes ausgebildet, um beim Drehen und Bewegen der Formrolle gegenüberliegende Seitenfläche eines Dammes aus Bodenmaterial zu formen. Die Formrolle dreht sich mit der Drehgeschwindigkeit der Laufstege. Zudem wird die Formrolle durch das Ziehen oder Schieben der Maschine über den Boden in einer translatorischen Richtung bewegt.

Die zwei Seitenformelemente eines Formelementes weisen vorzugsweise eine in radialer Richtung um die Drehachse ausgebildete rotationssymmetrische Grundform auf. Durch das Drehen des Formelementes und die gleichzeitige translatorische Bewegung des Formelementes ist ein einfacher und zuverlässiger Dammaufbau des Dammes aus Bodenmaterial, d.h. aus Erdmaterial, möglich.

Weiter ist durch die Drehbewegung der Formrolle die Formung des Dammes unempfindlich gegenüber Bodenunebenheiten oder/und Pflanzenmaterial, das beispielsweise durch eine Zwischenfruchtbebauung vorhanden ist. Zudem kann durch das Drehen der Formrolle ein Festhaften von Pflanzenmaterial an der Formrolle reduziert oder vermieden werden. Dies ist insbesondere bei nassem und klumpigen Bodenmaterial und beim Vorliegen von Pflanzen oder Pflanzenmaterial von Vorteil. Dadurch kann die Dammformung verbessert werden. Zudem ist es aufgrund der Formrolle möglich, die Maschine in translatorischer Richtung auch rückwärts zu bewegen, ohne dass eine Beschädigung der Formrolle beim Rückwärtsrollen über den Boden zu befürchten ist. Durch die rotationssymmetrische Grundform der Formrolle kann es nicht zu einem Stau von Bodenmaterial oder Pflanzenmaterial bei einem Rückwärtsbewegen der landwirtschaftlichen Maschine auf dem Boden kommen.

Im Querschnitt gesehen bilden die gegenüberliegenden Seitenflächen eines Formelelementes vorzugsweise eine im Wesentlichen in Richtung auf die Drehachse konisch zulaufende Begrenzungsform aus. Die Neigungswinkel der gegenüberliegenden Seitenflächen sind gemäß den Neigungswinkeln der Seitenflächen des Dammes ausgebildet. Durch das Drehen der Formrolle gemäß der Geschwindigkeit der translatorischen Bewegung der Formrolle wird ein Abrollen der Formrolle beim Abformen der Seitenwände des Dammes bewirkt, so dass auch dadurch ein Anhaften oder Anstauen von Pflanzenmaterial und/oder Bodenmaterial mit einer Verstopfungsgefahr am Formelement unterdrückt bzw. vermieden wird.

Zudem kann die Formrolle auch in M-Damm und Bettausführung profiliert werden. Die Formrolle kann mit oder ohne vorlaufende Häufelscheibe ausgeführt werden.

Die Formrolle kann in radialer Richtung eine im Wesentlichen geschlossene Oberfläche aufweisen. Insbesondere kann die Oberfläche der Formrolle, die beim Abrollen der Formfläche auf dem Boden in Kontakt mit dem Boden kommt, im Wesentlichen eine geschlossene Fläche darstellen, insbesondere eine vollständig geschlossene Fläche darstellen. Die Oberfläche der Formrolle gilt als im Wesentlichen geschlossen, wenn wenigstens 75%, insbesondere 90% oder mehr geschlossen ist.

In einer weiteren Ausführungsform weist ein Formelement zwischen den zwei Seitenformelementen im Mittenbereich ein Mittenformelement auf. Das Mittenformelement ist ausgebildet, um eine Oberseite des Dammes beim Formen des Dammes wenigstens teilweise zu formen. Beispielsweise kann das Mittenformelement die Grundform eines Zylinders aufweisen, dessen Mittenachse in der Drehachse liegt. Zudem kann das Mittenformelement einstückig mit den Seitenformelementen ausgebildet sein. Mithilfe des Mittenformelementes ist eine definierte Abformung und/oder Aufrauhung der Oberseite des Dammes möglich.

In einer weiteren Ausführungsform weisen die Laufstege wenigstens abschnittsweise eine Schneidkante auf. Die Schneidkante des Laufsteges schneidet beim Rollen auf dem Boden eine Schneidtiefe von beispielsweise 5 bis 15 cm in den Boden ein. Dadurch wird eine seitliche Führung der Maschine verbessert. Dies ist insbesondere beim Pflanzen an geneigten Bodenflächen von Vorteil, da ein seitliches Verrutschen der Maschine durch das Einschneiden der Schneidkanten in den Boden reduziert bzw. vermieden wird. Hier erfüllt die Schneidscheibe die Aufgabe einer Hangscheibe. Zudem kann die Schneidkante der Laufstege dazu dienen, Bodenmaterial und/oder Pflanzenmaterial zu zerschneiden bzw. zu zerkleinern. Auch dadurch wird ein Anhaften oder Anstauen von Pflanzenmaterial an der Formrolle erschwert. Die Schneidkanten können einen Schneidwinkel von 20° bis 70° aufweisen. Zudem können die Schneidkanten in Form eines radial umlaufenden Schneidbleches ausgebildet sein. Die Laufstege und/oder die Schneidkanten der Laufstege können an einer radialen Außenfläche Ausnehmungen oder Einbuchtungen aufweisen, die eine Wirkverbindung mit dem Boden verbessert und/oder ein Zerkleinern von Pflanzenmaterial und/oder Bodenmaterial erleichtert.

Die Schneidkanten, lockern den Boden in den Dammzwischenbereichen zusätzlich auf, sodass das Wasser besser in den Unterboden infiltrieren kann. Das reduziert die Erosionsgefahr sehr deutlich. Es verbessert den Ertrag, da das ertragsbestimmende Wasser an Ort und Stelle verbleibt. Bei einem zu viel an Wasser, versickert das Wasser im Dammtal und es wird der Vernässung des Kartoffelnestes im Damm vorgebeugt. Kann das Wasser im Dammzwischenbereich nicht in den Boden versickern, drückt es ins Kartoffelnest und die Kartoffeln sind einer Qualitätsverschlechterung, vor allem Fäulnis, ausgesetzt. Laufendes Wasser in den Beständen, transportiert Erwiniabakterien und durchseucht, von befallenen Einzelpflanzen aus, weitere Bestände.

Bei ausgesprochener Trockenheit erzeugt die Schneidkante eine Kerbwirkung im Boden. Beim Austrocknen der Böden schrumpfen Lehm und Tonanteile im Boden. Dadurch kommt es zu Rissen im Boden. Durch die Kerbwirkung der Schneidkanten, entstehen geradlinige Risse im Dammtal. Somit reduziert sich die Rissbildung im Dammbereich. Das ist vorteilhaft, da eine Rissbildung im Dammbereich, die Sonnenstrahlen bis zu den Kartoffelknollen vordringen lässt. In Folge der Sonnenbestrahlung über die Risse ergrünen die Knollen und müssen manuell entfernt werden. Dies erhöht den Personalaufwand, führt zu mehr Sortierabfall, der entsorgt werden muss, und schmälert die verkaufsfähige Menge an Kartoffeln.

In einer weiteren Ausführungsform ist an einem Laufsteg wenigstens eine Stechplatte angeordnet. Die Stechplatte ragt radial über den Laufsteg hinaus. Die Stechplatte ist ausgebildet, um beim Rollen des Laufsteges auf dem Boden in den Boden geschoben zu werden und ein Loch im Boden zu erzeugen bzw. auszuheben. Die Stechplatte kann beispielsweise eine quer zur Drehbewegung der Formrolle angeordnete Keilform aufweisen, wobei die Breite der Keilform mit zunehmendem radialen Abstand von der Drehachse abnimmt. Die Stechplatte ist dabei mit der Breite entlang der Drehachse ausgerichtet. Durch die Keilform wird ein Einstechen der Stechplatte in den Boden mit geringerer Kraft erreicht, wobei zudem im Bereich der Oberfläche des Bodens ein relativ größer Öffnungsbereich des erzeugten Loches ausgebildet wird. Abhängig von der gewählten Ausführungsform können mehrere Stechplatten auf einem Laufsteg, vorzugsweise mit gleichen radialen Abständen verteilt, angeordnet sein. Die Löcher im Boden bewirken eine Vergrößerung der Oberfläche des Bodens im Dammgraben zwischen zwei Dämmen, so dass Feuchtigkeit und Wasser leichter in den Boden eindringen kann. Zudem sorgen die Löcher im Boden im Dammgraben dafür, dass insbesondere in Hanglage Wasser beim Abfließen gebremst wird. Die Löcher bilden Querdämme und Teiche. Diese haben die Wirkung von Talsperren oder Staustufen. Das Wasser hat mehr Zeit einzusickern. Ein Ablaufen mit der damit verbundenen Erosion kann vermieden werden. Die Stechplatten verbessern zusätzlich die Traktion der Formrolle, so dass kaum Schlupf entsteht. Das ist vorteilhaft, da Schlupf die Dammflanken verschmieren würde. Verschmierte Dammflanken verschlechtern die Wasserinfiltration und den Gasaustausch von Kohlendioxid im Damm zu Gunsten von Sauerstoff außerhalb des Dammes. Hohe Kohlendioxidgehalte im Damm, die durch Umsetzungsprozesse im Boden entstehen, wirken toxisch auf das Bodenleben und die wachsende Kultur. Durch hohe Kohlendioxidkonzentrationen im Knollennest, werden Drahtwürmer angezogen, die sich in die Kartoffelknollen einbohren und die Knollen unbrauchbar machen. Drahtwürmer haben eine Kohlendioxidaffinität und folgen Kohlendioxidquellen. Drahtwürmer sind das Larvenstadium der Saatschnellkäfer.

Kartoffelknollen, die der Sonneneinstrahlung und somit einer Wärmebildung unterliegen, summieren die Wärme auf. Sobald eine gewisse Wärmesumme erreicht ist, wird die Keimruhe durchbrochen und die Knollen treiben vorzeitig aus. Im Bestand wird der sogenannte Durchtrieb mit Kindelbildung (neue Tochterknollen) ausgelöst. Im Kartoffellager ist die natürliche Keimruhe reduziert, was die Lagerdauer, durch vorzeitiges Auskeimen, verschlechtert.

In einer weiteren Ausführungsform weist das Traggestell einen ersten Abschnitt und einen zweiten Abschnitt auf. Der erste Abschnitt ist zur Befestigung an einer Zugmaschine vorgesehen. Der zweite Abschnitt ist drehbar am ersten Abschnitt gelagert. Die Formrolle ist am zweiten Abschnitt drehbar gelagert. Zwischen dem ersten Abschnitt und dem zweiten Abschnitt ist ein Stellelement vorgesehen, das den Drehwinkel zwischen dem ersten und dem zweiten Abschnitt ändern kann und insbesondere eine Vorspannkraft zwischen dem ersten Abschnitt und dem zweiten Abschnitt ausüben kann. Mithilfe des Stellelementes ist es möglich, die Formrolle vorzugsweise mit einer vorgebbaren Anpresskraft auf den Boden vorzuspannen. Dadurch kann die Dammformung abhängig von den Gegebenheiten positiv beeinflusst werden. Das Stellelement kann beispielsweise elektrisch oder hydraulisch in der Länge veränderbar ausgebildet sein. Hydraulisch vorgespannte Membranspeicher können Bodenunebenheiten oder wechselnde Bodenverhältnisse ausgleichen. Zudem können Sensoren vorgesehen sein, die eine Vorspannkraft zwischen dem ersten und zweiten Abschnitt erfassen. Weiterhin können Aktoren vorgesehen sein, mit denen die Vorspannkraft des Stellelementes automatisch verändert wird bzw. auf eine eingestellte Vorspannkraft geregelt wird. Somit kann die Dammhöhe auch bei unterschiedlich dichten oder unterschiedlich nassen Böden einheitlich ausgebildet werden. Diese Belastung der Formrolle führt dazu, dass von der vorgeschalteten Maschine Gewicht genommen wird. Gewicht wird großflächig auf die großen Flächen der Formrolle boden unschädlich übertragen. Die Räder und/oder Walzen zur Tiefenführung insbesondere einer vorgeschalteten Pflanzmaschine werden entlastet. Damit können auch höhere Maschinengewichte bodenunschädlich abgestützt werden.

In einer weiteren Ausführungsform weist der zweite Abschnitt einen u-förmigen Träger auf. Der u-förmige Träger umfasst einen Mittenabschnitt und zwei seitlich angeordnete abgewinkelte Endabschnitte. Die Formrolle ist mit den Drehlagern in den beiden Endabschnitten gelagert. Der Mittenabschnitt erstreckt sich entlang der Formrolle. Vorzugsweise ist das Stellelement am Mittenabschnitt befestigt. Auf diese Weise wird eine stabile und sichere Halterung der Formrolle bereitgestellt.

In einer Ausführungsform weisen die Seitenformelemente der Formrolle konische Kegelmantelflächen auf. Die Ausbildung der Seitenformelemente in Form von konischen Kegelmantelflächen ermöglicht ein Abformen der Dammseitenflächen mit einem geringen Widerstand beim lateralen Bewegen der Maschine über dem Boden. Durch die Kegelmantelflächen rollen die Seitenformelemente mit einem geringen Widerstand auf den abgeformten Seitenflächen des Dammes ab.

In einer weiteren Ausführungsform weisen die Seitenformelemente plane, keilförmige Teilflächen auf. Die Teilflächen sind mit einer Längserstreckung entlang der Drehachse ausgerichtet. Die Seitenkanten der Teilflächen sind ebenfalls entlang der Drehachse ausgebildet. Die Ausbildung der Seitenformelelemente in Form von planen keilförmigen Teilflächen ermöglicht eine kostengünstige Fertigung der Seitenformelemente. Zudem sorgen die Seitenkanten der planen keilförmigen Teilflächen für ein Einbringen von Vertiefungen in die Seitenflächen des Dammes. Dadurch wird die Oberfläche des Dammes erhöht. Zwei benachbarte Teilflächen grenzen mit einander zugeordneter Seiten aneinander an. Vorzugsweise sind die Seiten benachbarter Teilflächen miteinander verbunden, insbesondere verschweißt. Die einander zugeordneten Seiten benachbarter Teilflächen sind vorzugsweise in einer Ebene angeordnet, die durch die Längsachse der Formrolle geht. Die aneinander angrenzenden Seiten bilden Kanten, die beim Drehen der Formrolle mit dem Boden wechselwirken, und insbesondere die Abstützung gegenüber dem Boden verbessern.

In einer weiteren Ausführungsform weist der Laufsteg in radialer Richtung ausgerichtete Zähne auf, wobei zwischen den Zähnen in radialer Richtung zurückgesetzte Zwischenbereiche in den Laufstegen eingebracht sind. Dadurch wird eine Auflagefläche der Laufstege bzw. der Lauffläche auf dem Boden reduziert, so dass die Laufstege leichter in den Boden eindringen können. Somit wird insbesondere bei harten oder trockenen Böden ein leichteres und tieferes Eindringen der Laufstege in den Boden ermöglicht und die Seitenführung der Maschine insbesondere bei Hanglagen verbessert. Weiterhin können die Zähne und auch die Zwischenbereiche, die zwischen den Zähnen liegen, Schneidkanten aufweisen. Durch die Ausbildung der Zähne und die Ausbildung der Zwischenbereiche kann die Schneidwirkung der Schneidkanten erhöht werden. Somit werden auch harte Bodenstücke und/oder größeres und/oder härteres Pflanzenmaterial mithilfe der Schneidkanten der Zähne und/oder der Zwischenbereiche leichter zerschnitten werden.

In einer Ausführung weisen die Seitenformelemente ausgehend von einem Seitenrand in Richtung auf einen Mittenbereich im Querschnitt durch die Drehachse eine abgestufte radiale Oberfläche auf. Mit dieser Form können Dämme mit abgestuften Seitenflächen geformt werden.

Abhängig von der gewählten Ausführungsform weisen die Zwischenbereiche eine V-Form oder eine Teilkreisform in der Ebene der Zähne, d.h., senkrecht zur Drehachse der Formrolle auf. Die V-Form und die Teilkreisform, insbesondere versehen mit einer Schneidkante, verbessern das Eindringen bzw. die Schneideigenschaften der Laufstege.

In einer weiteren Ausführungsform weisen die Seitenformelemente und/oder die Mittenformelemente auf einer radialen Außenfläche Stege und/oder Vertiefungen auf, um beim Formen des Dammes Unebenheiten und/oder Vertiefungen und/oder Erhöhungen und/oder Strukturen in eine Oberfläche des Dammes einzubringen. Die Stege können in Form von Stiften oder Kanten ausgebildet sein. Ebenso können die Vertiefungen in Form von länglichen Nuten oder im Wesentlichen zylindrischen Nuten ausgebildet sein. Mithilfe der Stege oder Vertiefungen ist die Vergrößerung der Dammoberfläche mit einfachen Mitteln möglich. Dadurch wird das Eindringen von Regen in den Damm verbessert. Weiterhin wird das Ausbilden von Fließbereichen, in denen Regen Dammmaterial abschwemmen kann, vermieden bzw. reduziert.

In einer weiteren Ausführungsform sind die Stege und/oder die Vertiefungen der Außenflächen der Seitenformelemente und/oder der Mittenformelemente in der Weise ausgebildet, dass an Seitenflächen des Dammes wenigstens abschnittsweise terrassenartige Flächen abgeformt werden. Auch dadurch wird das Abfließen von Wasser von einer Dammoberseite zu dem Dammgraben verlangsamt. Dadurch kann mehr Regen in die Dammoberseite oder in die Dammseitenwände eindringen. Dies führt zum einen zu einer verbesserten Versorgung des Pflanzgutes mit Feuchtigkeit und zum anderen wird das Ausbilden von Wasserströmen im Dammzwischenbereich reduziert.

In einer Ausführung weisen seitliche Randbereiche der Formelemente lösbare Ringplatten und/oder lösbare Laufplatten auf, die die Laufstege der Formrolle darstellen. Damit können die Ringplatten und/oder die Laufplatten Verschleißteile darstellen, die einfach ausgetauscht werden können. Vorzugsweise wird in radialer Richtung eine formschlüssige Verbindung zwischen der Tragplatte und der Ringplatte bzw. zwischen der Tragplatte und jeder Laufplatte hergestellt. Damit werden die Ringplatte oder die Laufplatten sicher an der Tragplatte in radialer Richtung gehalten. Die Ringplatte bzw. die Laufplatten bilden die Laufstege mit den Laufflächen.

Die Tragplatte weist in einer Ausführungsform eine Scheibenform auf, wobei eine umlaufende Randkontur im Querschnitt senkrecht zur Drehachse gerade Segmentabschnitte aufweist. Die geraden Segmentabschnitte grenzen in einem Abknickpunkt aneinander und bilden einen Winkel. Der Winkel kann z.B. zwischen 130° und 180° liegen. Die Laufplatten bzw. die Ringplatte sind an der Unterseite analog mit einer abgeknickten Unterseite ausgebildet. Damit sitzt jede Laufplatte bzw. die Ringplatte formschlüssig in radialer Richtung gesehen auf der Tragplatte auf.

In einer Ausführung sind die Ringplatte und/oder die Laufplatten formschlüssig mit der Formrolle, insbesondere mit einer Tragplatte der Formrolle verbunden, und wobei insbesondere die Ringplatte und/oder die Laufplatten mithilfe einer Schraubverbindung an der Formrolle in Bezug auf ein Verschieben entlang der Drehachse der Formrolle gesichert sind. Damit ist eine einfache und zuverlässige lösbare Verbindung zwischen dem Laufsteg und der Formrolle und/oder zwischen der Ringplatte und der Formrolle möglich. Zudem kann die Ringplatte auch in mehrere getrennte Teilringplatten unterteilt sein.

Ein Vorteil der vorgeschlagenen Dammformmethode ist die Ausbildung von Dämmen mit einer stabilen Form, so dass auch an geneigten Hängen ein Abreißen der Dammseitenflächen d.h. der Dammflanken hangabwärts reduziert oder vermieden wird.

Die vorgeschlagene Formrolle ermöglicht auch bei Hanglagen das Formen von Dämmen, in denen das Pflanzgut, insbesondere Kartoffel, mittig im Damm angeordnet sind. Die mittige Ablage ist vorteilhaft, da ansonsten die Kartoffel aus den Dämmen herauswachsen und ergrünen, oder bei der Ernte verloren gehen. Die Formrolle bildet eine Matrize, die das Bodenmaterial, d.h. Erdmaterial, in eine vorgegebene Form drückt. Dabei ist die Verdichtung des Bodenmaterials an der Außenfläche des Dammes höher als im Inneren des Dammes. Dadurch werden Dämme geformt, die einen weichen Mittenbereich aufweisen, in dem das Pflanzgut liegt, und einen höheren verdichteten Außenbereich, der dem Damm eine stabile Form verleiht. Dieses wirkt auch der Winderosion entgegen. Winderosion hat eine Bedeutung auf Sand- und Moorböden. Hier kann es zur Einebnung der Dämme durch Wind kommen.

Versuche haben gezeigt, dass die Formrolle vorzugsweise keinen oder nur einen geringen Schlupf gegenüber der geformten Dammoberfläche aufweist.

Der Schlupf kann unter 15%, insbesondere unter 10% liegen. In vielen Anwendungen ist es vorteilhaft, wenn der Schlupf möglichst gering ist bzw. gegen Null geht. Als Schlupf wird eine relative Bewegung der Oberfläche der Formrolle gegenüber einer Dammoberfläche gesehen.

Ein weiterer Vorteil der Formrolle ist zudem, dass beim Formen der Dämme eine Dammoberfläche nicht verschmiert wird, d.h. die Dammoberfläche keine geschlossene dichte Oberfläche bildet. Besonders bei feuchten Bedingungen nehmen verschmierte Oberflächen weniger Wasser (Regen, Starkregen oder Wasser durch Feldberegnung) auf. Zudem wird durch dichte Dammoberflächen der Gasaustausch von Sauerstoff und Kohlendioxid erschwert.

Für feuchte oder Nasse Bedingungen kann die Formrolle auch mit Abstreifern ausgerüstet werden.

Im Gegensatz zu feststehenden Dammformern, die einen hohen Zugkraftbedarf haben, ist die sich selbst drehende Formrolle sehr leichtzügig. Somit wird der Zugkraftbedarf deutlich reduziert. Es kann Kraftstoff eingespart werden und der Schlupf an den Rädern einer Zugmaschine wird minimiert. Die Reduzierung des Schlupfes an den Rädern der Zugmaschine reduziert die Bodenverdichtung.

Diese Formrolle ist Grundlage für weitere Anwendungen in Dammkulturen. Dammkulturen finden vor allem im Bioanbau Anwendung, um Unkraut (Beikräuter) leichter maschinell bekämpfen zu können. Die Formrolle kann ebenso verwendet werden, um bei Kulturen wie Mais, Karotten, Zwiebeln, Rote Beete, Getreide und anderen landwirtschaftlichen Kulturen Dämme zu formen.

In einer Ausführung ist an wenigstens einem Laufsteg wenigstens eine weitere Laufplatte angeordnet ist, wobei die weitere Laufplatte eine Auflage auf dem Boden ermöglicht, ohne eine wesentliche Vertiefung im Boden zu erzeugen. Dazu kann die weitere Laufplatte eine Breite im Wesentlichen senkrecht zur Drehachse der Formrolle aufweisen, die beispielsweise im Bereich von 3 bis 10 cm liegt. Die weitere Laufplatte kann austauschbar an der Formrolle befestigt sein und insbesondere ein austauschbares Verschleißteil darstellen. Mithilfe der weiteren Laufplatte ist es möglich, die Erzeugung von Vertiefungen im Boden zu vermeiden. Somit ist der Dammgraben, in dem die weitere Laufplatte gerollt ist, für eine Person einfacher begehbar. Zudem weist dieser Dammgraben keine oder nur geringe Vertiefungen auf.

In einer Ausführung sind im radialen Umfang an dem Laufsteg mehrere weitere plane Laufplatten angeordnet sind, die eine umlaufende Lauffläche mit Querkanten darstellen. Somit wird mit einfachen Mitteln eine umlaufende Auflage bereitgestellt, wobei die planen Laufplatten eine Auflage auf dem Boden ermöglichen, ohne eine wesentliche Vertiefung im Boden zu erzeugen. Zudem kann durch das Vorsehen mehrerer weiterer Laufplatten eine Reparatur vereinfacht werden. Es muss nur die weitere Laufplatte ausgetauscht werden, die schon zu sehr abgenutzt ist. Zudem kann eine plane weitere Laufplatte einfach hergestellt werden. Die planen weiteren Laufplatten bilden eine in Umfangrichtung der Formrolle abgekantete Lauffläche. Weiterhin ist an den Berührungskanten zwischen zwei weiteren Laufplatten eine Querfuge mit zwei Querkanten ausgebildet, die den Kontakt zum Boden verbessern. Die Querfuge kann im Wesentlichen quer zur Drehachse der Formrolle, insbesondere senkrecht zur Drehachse der Formrolle, angeordnet sein.

In einer Ausführung weist die Formrolle wenigstens einen Antrieb zum Drehen der Formrolle auf. Die Drehgeschwindigkeit und/oder das Drehmoment des Antriebes kann steuer- oder regelbar abhängig von einem Parameter, insbesondere abhängig von einer Zuggeschwindigkeit der Maschine sein, mit der sich die Maschine in der Zugrichtung über den Boden bewegt.

Die Steuerung oder Regelung kann von einem entsprechenden Steuergerät ausgeführt werden, das entweder an der Maschine und/oder an der Zugmaschine angeordnet ist. Zudem können Sensoren an der Maschine und/oder der Zugmaschine vorgesehen sein, die den Parameter, insbesondere die Zuggeschwindigkeit, erfassen und an das Steuergerät übermitteln. Durch das Vorsehen des Antriebes zum Drehen der Formrolle wird die Zuglast für die Zugmaschine reduziert. Somit kann die Maschine auch von einer leistungsschwächeren Zugmaschine gezogen werden. Durch die kleinere benötigte Zuglast der Zugmaschine wird auch die Verdichtung des Bodens durch die Räder der Zugmaschine reduziert, da die Räder der Zugmaschine weniger Drehmoment gegenüber dem Boden abstützen müssen.

In einer Ausführung sind Stellelemente vorgesehen, mit denen eine Tiefenführung eines Mittels zum Ausbilden eines Legekanals für Saatgut, insbesondere Kartoffeln, veränderbar ist. Somit kann abhängig von der gewünschten Tiefe des Legekanals die Höhenposition des Mittels zum Ausbilden des Legekanals eingestellt werden. Somit kann mit der gleichen Maschine die Tiefe des Legekanals verändert werden. Insbesondere kann eine Tiefenführung einer Schar, die zum Ausbilden des Legekanals vorgesehen ist, veränderbar ausgebildet sein.

In einer Ausführung sind ein Mittel zum Ausbilden eines Legekanals für Saatgut, insbesondere Kartoffeln, und die Formrolle in der Weise ausgebildet und angeordnet, dass beim Legen des Saatgutes ein überwiegender Teil des Erdmaterials, das vom Mittel zum Ausbilden des Legekanals in Bewegung versetzt wird, so lange in Bewegung bleibt, bis die Formrolle aus dem sich bewegenden Erdmaterial einen Damm bildet. Auf diese Weise wird ein Verklumpen des Bodenmaterials, insbesondere bei nassem Boden reduziert bzw. verhindert. Zudem wird die benötigte Zugkraft reduziert, da das sich bewegende Bodenmaterial mit weniger Kraft zu einem Damm geformt werden kann.

In einer Ausführung ist ein Auflockerungswerkzeug vorgesehen, das in Fahrtrichtung vor dem Mittel zum Ausbilden des Legekanals angeordnet ist, wobei das Auflockerungswerkzeug das Erdmaterial durch die Auflockerung in Bewegung versetzt, und wobei das Auflockerungswerkzeug und das Mittel zum Ausbilden des Legekanals in der Weise angeordnet und ausgebildet sind, dass ein überwiegender Teil des vom Auflockerungswerkzeug in Bewegung versetzte Erdmaterial so lange in Bewegung bleibt, bis das Mittel zum Ausbilden des Legekanals wenigstens teilweise aus dem in Bewegung befindlichen Erdmaterial den Legekanal formt. Auch dadurch wird ein Verklumpen des Bodenmaterials, insbesondere bei nassem Boden reduziert bzw. verhindert. Zudem wird die benötigte Zugkraft reduziert, da in das sich bewegende Bodenmaterial mit weniger Kraft ein Legekanal geformt werden kann.

In einer Ausführung ist ein Halteelement vorgesehen, mit dem die Maschine in Richtung Boden mit einem veränderbaren Druck beaufschlagbar ist. Dadurch kann ein möglichst gleichbleibender Druck der Maschine auf den Boden ermöglicht werden. Somit werden beispielsweise die Tiefe des Legekanals und/oder die Tiefe des Auflockerungswerkzeuges und/oder die Tiefe der Formrolle möglichst konstant gehalten, auch wenn sich beispielsweise der Füllstand des Vorratsbehälters ändert. Zudem kann der Druck an unterschiedliche Bodendichten angepasst werden. In einer Ausführung ist ein Steuermittel, insbesondere ein Steuergerät, vorgesehen, mit dem in Abhängigkeit von wenigstens einem weiteren Parameter der Druck verändert werden kann, mit dem die Maschine in Richtung Boden gedrückt wird.

In einer Ausführung weist die Maschine keine Tragrolle auf und stützt sich insbesondere im Wesentlichen mit der Formrolle auf dem Boden ab. Zudem weist die Maschine insbesondere kein Rad auf.

Die oben beschriebenen Eigenschaften, Merkmale und Vorteile dieser Erfindung, sowie die Art und Weise, wie diese erreicht werden, werden klarer und deutlicher Verständlich im Zusammenhang mit der folgenden Beschreibung der Ausführungsbeispiele, die im Zusammenhang mit den Zeichnungen näher erläutert werden, wobei
Fig. 1 eine perspektivische Darstellung der landwirtschaftlichen Maschine,
Fig. 2 eine schematische Seitenansicht der landwirtschaftlichen Maschine,
Fig. 3 eine perspektivische Darstellung eines zweiten Abschnittes des Traggestells mit der Formrolle,
Fig. 4 eine schematische Darstellung einer Ausführungsform der Formrolle,
Fig. 5 eine Draufsicht der Formrolle der Fig. 4,
Fig. 6 eine perspektivische Darstellung einer weiteren Ausführungsform der Formrolle,
Fig. 7 eine schematische Seitenansicht der weiteren Ausführungsform der Formrolle,
Fig. 8 eine schematische Darstellung einer weiteren Ausführungsform der Formrolle,
Fig. 9 eine schematische Darstellung einer weiteren Ausführungsform einer Formrolle mit Stiften, Stegen und/oder Einbuchtungen,
Fig. 10 eine weitere Darstellung der Formrolle der Fig. 8,
Fig. 11 eine perspektivische Darstellung der Formrolle der Fig. 10,
Fig. 12 A bis 12 E verschiedene Ansichten auf ein Ende der Formrolle der Fig. 10,
Fig. 13 eine Darstellung einer Formrolle mit abgestuften Seitenformelementen,
Fig. 14 eine perspektivische Ansicht der Formrolle der Fig. 13,
Fig. 15 eine Draufsicht auf ein Ende der Formrolle der Fig. 13,
Fig. 16 schematisch eine Teildarstellung der Maschine mit der Formrolle der Fig. 13 beim Formen der Dämme,
Fig. 17 eine schematische Darstellung eines Querschnittes durch einen geformten Damm,
Fig. 18 eine schematische Teildarstellung einer Formrolle mit Darstellung der formschlüssigen Verbindung der Tragplatte mit den Laufplatten, und
Fig. 19 eine vergrößerte Teildarstellung der Fig. 18 mit Darstellung der Schraubverbindung, die die Laufplatte an der Tragplatte hält.
Fig. 20 bis 23 zeigen schematische Darstellungen einer weiteren Ausführungsform einer Formrolle,
Fig. 24 bis 28 zeigen schematische Darstellungen einer weiteren Ausführungsform einer landwirtschaftlichen Maschine, und
Fig. 29 bis 31 zeigen eine landwirtschaftliche Maschine in Form einer Hebemaschine, insbesondere ohne eine Tragrolle.

Die Erfindung wird im Folgenden anhand einer landwirtschaftlichen Maschine mit einer Pflanzeinrichtung, insbesondere zum Pflanzen von Kartoffeln, beschrieben. Die Erfindung, insbesondere die Formrolle kann bei jeder Art von landwirtschaftlicher Maschine eingesetzt werden. Zudem kann die Formrolle alleine als landwirtschaftliche Maschine verwendet werden. Das Traggestell kann in verschiedenen Formen ausgebildet sein. Zudem kann auf das Traggestell auch verzichtet werden.

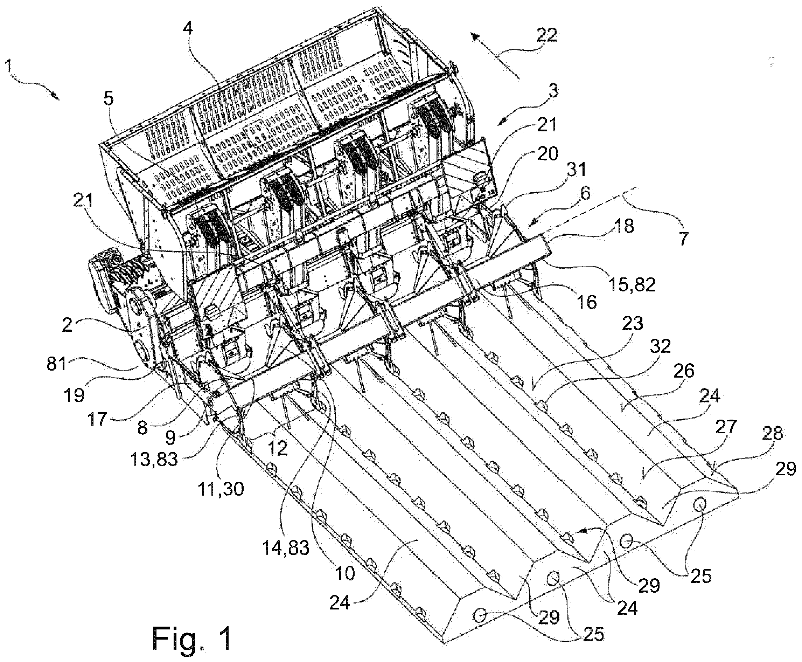

Fig. 1 zeigt in einer schematischen Darstellung eine landwirtschaftliche Maschine 1 mit einem Traggestell 2, mit einer Pflanzeinrichtung 3, mit einem Vorratsbehälter 4 für Pflanzgut und einer Entnahmeeinrichtung 5 zum Befördern des Pflanzgutes auf einen Boden 23. Es sind mehrere Entnahmeeinrichtungen 5 vorgesehen, die nebeneinander am Vorratsbehälter 4 angeordnet sind. Weiterhin ist am Traggestell 2 ein Dammformer 6 zum Aufbau eines Dammes aus Bodenmaterial vorgesehen. Der Dammformer 6 ist ausgebildet, um das abgelegte Pflanzgut mit dem Damm aus Bodenmaterial zu bedecken. Der Dammformer 6 weist eine um eine Drehachse 7 drehbar gelagerte Formrolle 8 auf.

Die Formrolle 8 weist mehrere entlang der Drehachse 7 nebeneinander angeordnete Formelemente 12 auf. Ein Formelement 12 weist jeweils ein erstes und ein zweites Seitenformelement 9, 10 auf. Zwischen den zwei Seitenformelementen 9, 10 ist ein Mittenbereich 11 vorgesehen. Das Formelement 12 weist ausgehend von einem ersten Randbereich 13 das erste Seitenformelement 9 auf. Ausgehend vom ersten Randbereich 13 ist ein radialer Durchmesser des ersten Seitenformelementes entlang der Drehachse in Richtung auf den Mittebereich 11 wenigstens abschnittsweise abnehmend ausgebildet. Ausgehend vom Mittenbereich 11 nimmt ein radialer Durchmesser des zweiten Seitenformelementes 10 in Richtung auf einen zweiten Randbereich 14 des Formelementes 12 wenigstens abschnittsweise zu.

Das Traggestell 2 weist einen ersten Abschnitt 81 auf, der die Pflanzeinrichtung trägt. Zudem weist das Traggestell einen zweiten Abschnitt 82 mit einem U-förmigen Bügel 15 auf, wobei ein Querträger 16 quer zur Maschine 1 und quer zu einer Bewegungsrichtung 22 angeordnet ist. Der Querträger 16 weist im Endbereich einen ersten und einen zweiten Endträger 17, 18 auf. Die Endträger 17, 18 sind abgewinkelt zur Quererstreckung des Querträgers 16 angeordnet. Insbesondere sind die Endträger 17, 18 im 90° Winkel zum Querträger 16 abgewinkelt. Die Endträger 17, 18 sind an dem ersten Abschnitt 81 des Traggestells 2 befestigt. Vorzugsweise sind die Endträger 17, 18 über ein erstes und ein zweites Lager 19, 20 jeweils drehbar am ersten Abschnitt 81 des Traggestells 2 gelagert. Abhängig von der gewählten Ausführungsform kann auf das erste und das zweite Lager 19, 20 auch verzichtet werden und der U-förmige Träger 15 starr am Traggestell 2 befestigt sein.

In der dargestellten Ausführungsform ist der U-förmige Träger 15 schwenkbar gegenüber dem Traggestell 2 gelagert. Zwischen dem ersten Teil des Traggestells 2 und dem Träger 15 als zweiten Teil des Traggestells ist mindestens ein Stellelement 21 vorgesehen. Das Stellelement 21 ist in der Länge veränderbar und mit einem ersten Ende sowohl drehbar am Traggestell 2 als auch mit einem zweiten Ende drehbar am Träger 15 gehaltert. Das Stellelement 21 ist in der Länge elektrisch und/oder hydraulisch veränderbar ausgebildet. Somit kann mithilfe des Stellelementes 21 eine Drehposition des Trägers 15 relativ zum ersten Teil des Traggestells 2 eingestellt werden. Zudem können Sensoren und ein Steuergerät vorgesehen sein, mit denen eine Vorspannkraft gemessen wird, die das Stellelement 21 über den Träger 15 auf die Formrolle 8 ausübt. Abhängig von der gewählten Ausführungsform kann die Steuereinheit ausgebildet sein, um über Aktoren, die die Länge und/oder Steifigkeit des Stellelementes einstellen, eine gewünschte Vorspannkraft mit dem Stellelement 21 auf den Träger 15 und die Formrolle 8 ausüben bzw. die Vorspannkraft auf einen vorgebbaren Sollwert regeln.

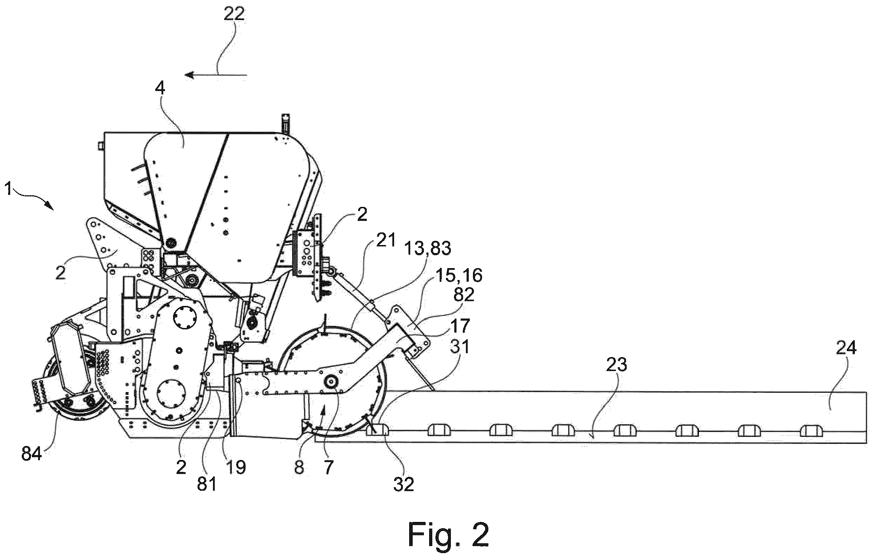

Die landwirtschaftliche Maschine 1 wird beim Einbringen des Pflanzgutes 25, insbesondere beim Legen von Kartoffeln, in der Bewegungsrichtung 22 von einer Zugmaschine, insbesondere einem Traktor geschoben oder gezogen. In der dargestellten Ausführungsform weist die Maschine 1 eine über die gesamte Arbeitsbreite ausgebildete Tragrolle 84 (Fig. 2) zur Tiefenführung der Maschine auf. Eine weitere Ausführungsform weist keine eigenen Räder auf, sondern das Traggestell 2 wird von der Zugmaschine in der Höhenposition getragen. Abhängig von der gewählten Ausführungsform kann die Maschine 1 auch eigene Räder aufweisen. Die Entnahmeeinrichtungen 5 sind in Zugrichtung 22 nach dargestellten Auflockerungswerkzeugen 2, wie z.B. eine Rotorfräse, Egge, Scheibenegge, Grubber und/oder Kreiselegge und vor der Formrolle 8 angeordnet. Die Auflockerungswerkzeuge dienen dazu, den Boden aufzulockern und für das Ablegen des Pflanzgutes vorzubereiten. Die Entnahmeeinrichtungen 5 in Verbindung mit Scharen sind jeweils im Mittenbereich 11 zwischen den Seitenformelementen 9, 10 angeordnet und sind ausgebildet, um das Pflanzgut in der Zugrichtung 22 vor dem Mittenbereich 11 der Formrolle 8 auf den Boden bzw. in den Boden abzulegen.

Im Pflanzbetrieb, der in Fig. 1 dargestellt ist, liegt die Formrolle 8 mit den Randbereichen 13, 14 auf dem Boden 23 auf. Zudem wird die Maschine 1 von der Zugmaschine in der Zugrichtung 22 gezogen, wobei die Randbereiche 13, 14 Laufstege 83 darstellen, die abschnittsweise auf dem Boden aufliegen und entlang der Zugrichtung 22 über den Boden 23 rollen. Durch das laterale Bewegen der landwirtschaftlichen Maschine 1 über dem Boden und das Abrollen der Laufstege 83 auf dem Boden wird die Formrolle 8 entlang der Zugrichtung 22 über den Boden 23 lateral bewegt, wobei sich die Formrolle 8 gleichzeitig um die Drehachse 7 dreht. Vorzugsweise erfolgt das Drehen der Formrolle 8 über dem Boden 23 ohne einen wesentlichen Schlupf der Laufstege 83 gegenüber der lateralen Bewegung.

Die Formelemente 12 der Formrolle 8 sind in der Weise ausgebildet, dass das aufgelockerte Bodenmaterial zu Dämmen 24 geformt wird, wobei die Dämme 24 das Pflanzgut 25, insbesondere Kartoffel, mit Erdmaterial bedecken. Jeder Damm 24 weist eine Oberseite 26 und Seitenflächen 27, 28 auf. Zwischen den Dämmen 24 ist jeweils ein Dammgraben 29 ausgebildet. Die Seitenflächen 27, 28 der Dämme 24 werden von den Seitenformelenten 9, 10 der Formrolle 8 gebildet. Abhängig von der gewählten Ausführungsform weist ein Formelement zwischen den zwei Seitenformelementen 9, 10 im Mittenbereich 11 ein Mittenformelement 30 auf. Das Mittenformelement 30 kann ausgebildet sein, um die Oberseite 26 der Dämme 24 wenigstens teilweise zu formen.

In der dargestellten Ausführungsform weist die Formrolle 8 in den Randbereichen 13, 14 Stechplatten 31 auf. Die Stechplatten 31 sind ausgebildet, um beim Abrollen der Formrolle 8 auf dem Boden 23 Löcher 32 im Dammgraben 29 im Boden 23 auszuformen. Die Stechplatten 31 ragen dabei in radialer Richtung über den äußeren Randbereich der ersten und zweiten Randbereich 13, 14 hinaus.

Fig. 2 zeigt in einer schematischen Darstellung eine Seitenansicht der Maschine 1. In der Seitenansicht ist die relative Anordnung des U-förmigen Trägers 15, d.h. des ersten Teils des Traggestells, gegenüber dem zweiten Teil des Traggestells 2 klar zu erkennen, wobei den Abstand zwischen dem Traggestell 2 und dem U-förmigen Träger 15 das Stellelement 21 vorgibt. Zudem ist in dieser Ansicht auch schematisch das erste Lager 19 dargestellt, mit dem der erste Endträger 17 am Traggestell 2 drehbar gehaltert ist. Mithilfe des Stellelementes 21 kann die relative Position des U-förmigen Trägers 15 gegenüber dem Traggestell eingestellt bzw. verändert werden. Je größer die Länge des Stellelementes 21 ist, umso tiefer bzw. mit umso höherer Vorspannkraft wird die Formrolle 8 auf den Boden 23 gedrückt.

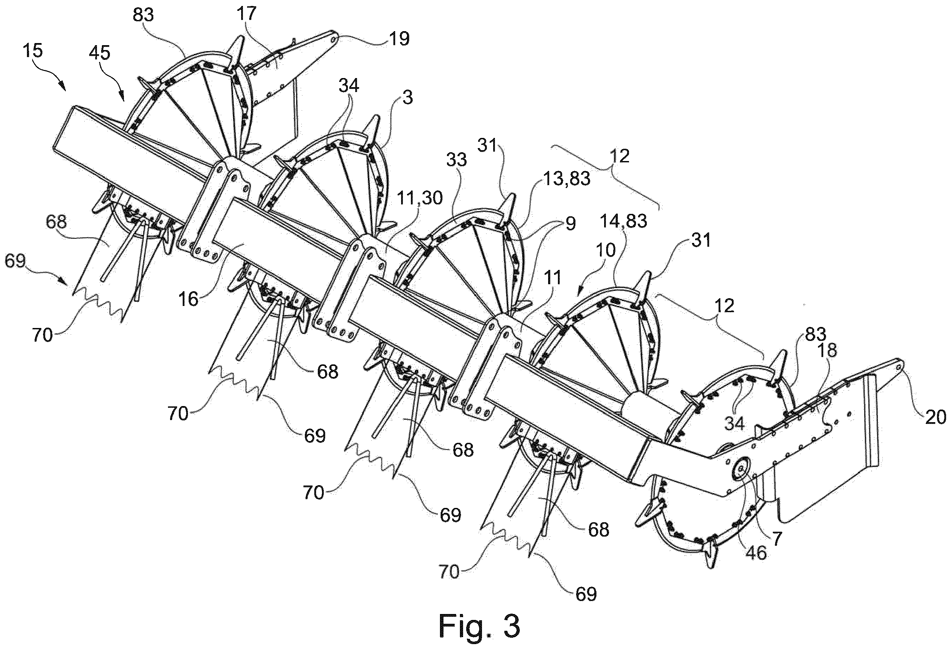

Fig. 3 zeigt in einer weiteren perspektivischen Teildarstellung den U-förmigen Träger 15 mit der drehbar gelagerten Formrolle 8. Die Formrolle 8 ist mit entsprechenden weiteren Drehlagern 45, 46 in den Endträgern 17, 18 drehbar um die Drehachse 7 gehaltert. Zudem sind in Endbereichen der Endträger 17, 18 das erste und das zweite Lager 19, 20 angedeutet, mit denen der U-förmige Träger 15 Traggestell 2 drehbar gehaltert ist. In dieser Darstellung ist deutlich zu erkennen, dass in den Randbereich 13, 14 der Formelemente 12 jeweils eine umlaufende Ringplatte 33 ausgebildet sein kann. Die Ringplatte 33 steht in radialer Richtung über das erste und das zweite Seitenformelement 9, 10 bezogen auf die Drehachse 7 hinaus. Zudem sind die Stechplatten 31 auf die Ringplatte 33 aufgesteckt oder mit der Ringplatte 33 verschweißt bzw. verschraubt.

Weiterhin können die Seitenformelemente 9, 10 als separate Elemente ausgebildet sein, die über Schraubverbindungen 34 mit der Ringplatte 33 verschraubt sind. Die Ringplatte 33 kann in Teilringplatten unterteilt sein, die jeweils eine Teilringform aufweisen. Zudem können die Ringplatte und/oder die Teilringplatten lösbar an der Formrolle befestigt sein. Beispielsweise kann eine Schraubverbindung zum Befestigen der Ringplatte bzw. der Teilringplatten verwendet werden. Abhängig von der gewählten Ausführungsform können die Ringplatte 33 und die Seitenformelemente 9, 10 auch einteilig ausgebildet sein.

Die Ringplatte 33 erstreckt sich in einer radialen Richtung gegenüber dem Endbereich des ersten und des zweiten Seitenformelementes 9, 10 um 5 cm bis 15 cm. Die Stechplatte 31 kann im Bereich der Ringplatte 33 eine Breite von 10 cm bis 20 cm aufweisen und in radialer Richtung konisch bis zu einer Spitze mit einer Breite von 3 cm bis 5 cm zulaufend ausgebildet sein. Die Stechplatten 31 sind mit der Breite parallel zur Drehachse ausgerichtet. Die Ausbildung der Ringplatte 33 sorgt dafür, dass durch die geringe Breite der Ringplatte 33 die Ringplatte 33 in den Boden 23 beim Abrollen der Formrolle 8 eindringt und somit einen stabilen Seitenhalt der Maschine 1 gewährleistet.

Abhängig von der gewählten Ausführungsform kann die Ringplatte 33 auch lösbar mit der Formrolle 8 verbunden sein, insbesondere über eine formschlüssige Verbindung mit einer Tragplatte der Formrolle verbunden sein. Zudem kann die Ringplatte 33 auch in mehrere getrennt Teilringplatten unterteilt sein.

Abhängig von der gewählten Ausführung können am Träger 15 auch Kammbleche 68 angeordnet sein, die Oberseiten der Dämme aufrauhen und/oder formen. Dazu können die Kammbleche 68 an unteren Ende 69, das dem Damm zugewandt ist, eine gezackte Kammstruktur 70 aufweisen. Die Kammbleche 68 können bei jeder Art der beschriebenen Formrollen vorgesehen sein. Die Kammplatten sind in der Länge verstellbar ausgebildet. So kann ein zu hoher Damm abgestreift und die Dammhöhe und somit eine zu hohe Überdeckung der Knollen reduziert werden.

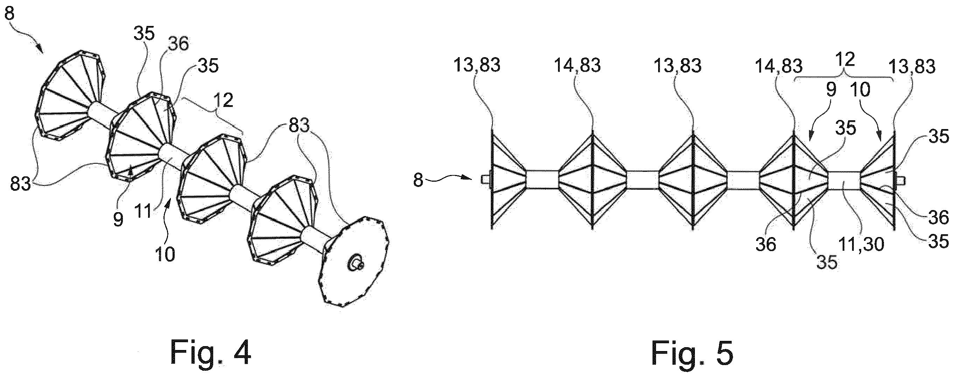

Fig. 4 zeigt in einer schematischen Darstellung die Formrolle 8, wobei in dieser Ausführungsform das erste und das zweite Seitenformelement 9, 10 der Formelemente 12 plane, keilförmige Teilflächen 35 aufweisen. Die Teilflächen 35 sind mit einer Längserstreckung entlang der Drehachse 7 ausgerichtet, wobei die Breite der Teilflächen ausgehend von einem Randbereich 13, 14 in Richtung auf den Mittenbereich 11 des Formelementes 12 konisch zulaufen. Die Teilflächen 35 sind in Randbereichen 36 entweder miteinander einstückig verbunden oder miteinander verschweißt. Auf diese Weise wird mithilfe von planen Teilflächen 35 ein im wesentlichen rotationssymmetrisches erste und zweite Seitenformelemente 9, 10 realisiert. Die Oberflächen der Seitenformelemente stellen im Wesentlichen konische Grundformen dar, die in festgelegten Winkeln zueinander angeordnete Teilflächen 35 aufweisen.

Fig. 5 zeigt eine Draufsicht auf die Formrolle 8 der Fig. 4.

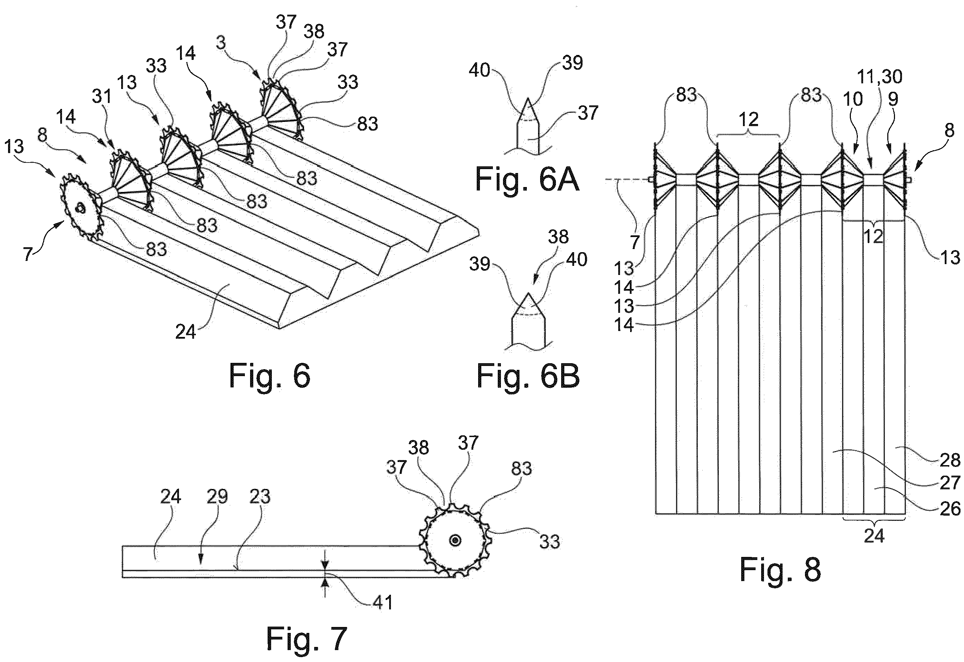

Fig. 6 zeigt in einer schematischen Teildarstellung der Maschine eine weitere Ausführungsform einer Formrolle 8 beim Formen der Dämme 24, wobei die Formrolle 8 im Wesentlichen gemäß der Ausführungsform der Fig. 3 bis 5 ausgebildet ist. Jedoch weist bei dieser Ausführungsform die Ringplatte 33 radial nach außen gerichtete Zähne 37 auf. Die Zähne 37 sind durch Zwischenbereiche 38 voneinander getrennt. Die Zwischenbereiche 38 stellen radiale Einbuchtungen dar. Die Zähne sind gleichmäßig über einen radialen Umfang des ersten und des zweiten Randbereiches 13, 14 verteilt angeordnet. Die Zwischenbereiche 38 sind in radialer Richtung gesehen gegenüber den Zähnen 37 zurückgesetzt. Die Zwischenbereiche 38 können beispielsweise eine V-Form oder eine Halbkreisform oder ein Teilkreisform in einer Ebene senkrecht zur Drehachse 7 aufweisen. Diese Ausbildungsform weist den Vorteil auf, dass sich die Zähne 37 beim Abrollen der Lauffläche der Ringplatte 33 auf dem Boden 23 leichter und tiefer in den Boden 23 eingraben. Somit wird ein verbesserter Seitenhalt auch bei harten oder trockenen Böden auch mit einer geringen Vorspannkraft der Formrolle 8 in Richtung Boden erreicht. Abhängig von der gewählten Ausführungsform können radiale Außenkanten der Zähne 37 und der Zwischenbereiche 38 auch abschnittsweise oder vollumfänglich eine Schneidkante 39 aufweisen, wie in den Fig. 6A und 6B schematisch dargestellt ist.

Diese Einbuchtungen verbessern die Traktion der Formrolle, so dass kaum Schlupf entsteht. Das ist vorteilhaft, da Schlupf die Dammflanken verschmieret. Verschmierte Dammflanken verschlechtern die Wasserinfiltration und den Gasaustausch.

Fig. 6A zeigt in einer schematischen Teildarstellung einen Querschnitt durch einen Zahn 37 mit einer Schneidkante 39 an der Oberseite des Zahnes 37 einer Ringplatte 33 der Formrolle 8 der Fig. 6. Die Schneidkante 39 kann sich über die gesamte radiale Außenkante des Zahnes erstrecken. Zudem kann ein Schneidwinkel 40 der Schneidkante 39 beispielsweise zwischen 20° und 70° liegen.

Fig. 6B zeigt in einer schematischen Darstellung einen Teilquerschnitt durch eine Ringplatte 33 der Fig. 6 im Bereich eines Zwischenbereiches 38, der ebenfalls eine Schneidkante 39 aufweist. Abhängig von der gewählten Ausführungsform kann sich die Schneidkante 39 auch im Zwischenbereich 38 über die gesamten Zwischenbereiche 38 erstrecken. Zudem kann ein Schneidwinkel 40 der Schneidkante 39 beispielsweise zwischen 20° und 70° liegen.

Durch die Ausbildung der Schneidkante kann das Eindringen der Ringplatte 33 in den Boden 23 erleichtert werden. Zudem wird durch die Schneidkante ein Zerkleinern des Bodens und/oder ein Zerkleinern von Pflanzenmaterial erleichtert. Dadurch kann Pflanzenmaterial mithilfe der Schneidkante leichter zerschnitten werden, so dass ein Anheften von Pflanzenmaterial an der Formrolle reduziert oder verhindert wird. Zudem wird durch das Zerschneiden des Pflanzenmaterials die Formgebung der Oberflächen der Dämme verbessert.

Fig. 7 zeigt in einer schematischen Seitendarstellung das Eindringen der Zähne 37 in den Boden 23 in den Dammgräben 29 der Dämme 24. Die Zähne 37 können beispielsweise eine radiale Erstreckung von 5 cm bis 20 cm haben. In Fig. 7 ist eine Eindringtiefe 41 der Ringplatte 33 in die Oberfläche des Bodens 23 schematisch dargestellt.

Abhängig von der gewählten Ausführungsform kann auf den Zähne 37 zusätzlich eine Stechplatte 31 ausgebildet sein, die in den Ausführungsformen der Fig. 1 bis 3 dargestellt ist. Auch bei dieser Ausführungsform können Stechplatten an der Ringplatte 33 befestigt sein.

Fig. 8 zeigt in einer schematischen Teildarstellung der Maschine eine weitere Ausführungsform einer Formrolle 8 beim Formen von Dämmen 24. In dieser Ausführung weisen das erste und das zweite Seitenformelement 9, 10 eines Formelementes jeweils eine konische Kegelfläche auf, die ausgehend von dem Randbereich 13, 14 in Richtung auf den Mittenbereich 11 einen Durchmesser aufweist, der wenigstens abschnittsweise abnimmt. Bei dieser Ausführungsform sind die Kegelflächen des ersten und des zweiten Seitenformelementes 9, 10 im Querschnitt senkrecht zur Drehachse 7 ringförmig ausgebildet. Der Mittenbereich 11 kann als zylinderförmiges Mittenformelement 30 ausgebildet sein. Auch bei dieser Ausführungsform können im Bereich des ersten und des zweiten Randbereiches 13, 14 Ringplatten 33 vorgesehen sein, die die Laufstege 83 bilden. Die Ringplatten 33 können lösbar am Randbereich 13, 14 befestigt sein. Zudem können die Ringplatten 33 Zähne 37 und Zwischenbereiche 38 mit und ohne Schneidkanten 39 und auch Stechplatten 31 aufweisen, wie in den vorhergehenden Figuren erläutert.

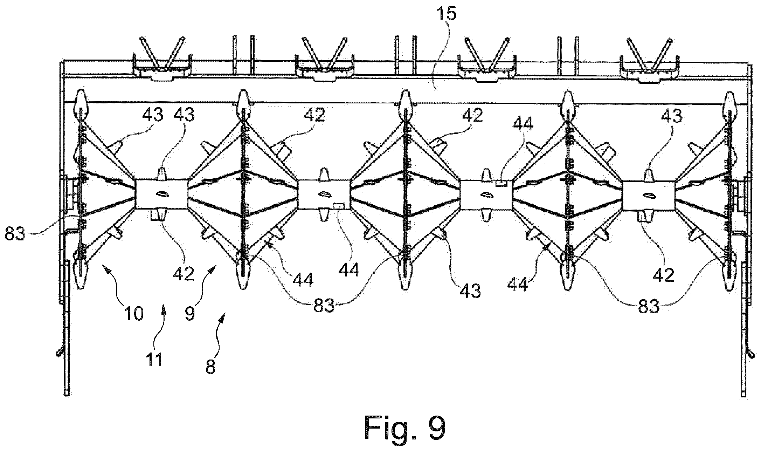

Fig. 9 zeigt in einer schematischen Darstellung eine weitere Ausführungsform einer Formrolle 8, bei der Stege 42 oder Stifte 43 aus den Oberflächen der Seitenformelemente 9, 10 und/oder dem Mittenbereich 11 herausragen. Zudem können Seitenformelemente 9, 10 und der Mittenbereich 11 Einbuchtungen 44 aufweisen. Die Stifte 43, Stege 42 und Einbuchtungen 44 können auch bei der Ausführungsform der Fig. 8 mit den konischen Kegelflächen der Seitenformelenten 9, 10 ausgebildet sein.

Die Stifte 43, Stege 42 und Einbuchtungen 44 dienen dazu, um die Oberfläche der Dämme beim Formen der Dämme zu strukturieren. Dadurch wird die Oberfläche der Dämme vergrößert. Damit kann die Wasseraufnahme verbessert bzw. ein Wasserabfluss in Richtung Dammgraben behindert werden. Die Stifte 43 bzw. Stege 42 können beispielsweise 10 mm bis 50 mm über die Oberfläche der Seitenformelemente 9, 10 und des Mittenbereiches 11 hinausragen. Zudem können die Einbuchtungen 44 ebenfalls beispielsweise 10 mm bis 50 mm ausgehend von Oberfläche der Seitenformelemente 9, 10 und des Mittenbereiches 11 in Richtung auf die Drehachse 7 ausgebildet sein.

Die Formen der Stege, Stifte und Einbuchtungen kann verschiedene Formen und Querschnitte aufweisen. Zudem können die Stifte, Stege und Einbuchtungen bei allen beschriebenen Formen Formrolle, insbesondere bei allen beschriebenen Seitenformelementen und Mittenformelementen ausgebildet sein. Die Einbuchtungen 44 stellen Vertiefungen dar.

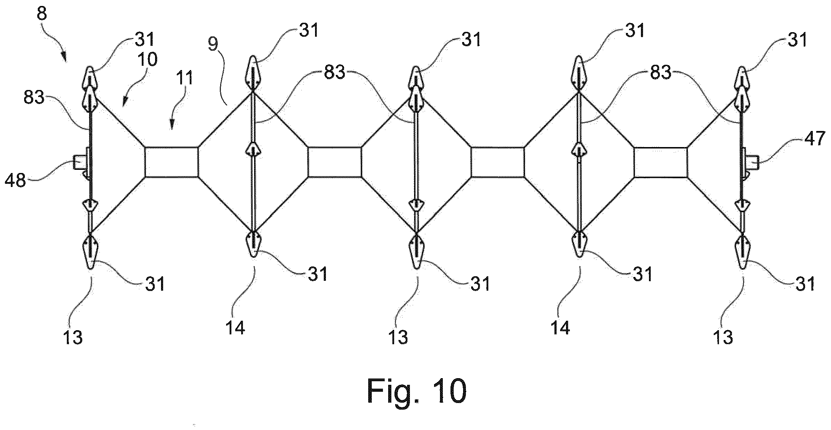

Fig. 10 zeigt eine perspektivische Darstellung der Formrolle 8 der Fig. 8 mit Stechplatten 31 auf den Laufstegen in den Randbereichen 13, 14. Die Formrolle 8 weist an gegenüberliegenden Enden Endstücke 47, 48, mit denen die Formrolle 8 in dem Träger 15 drehbar gelagert ist.

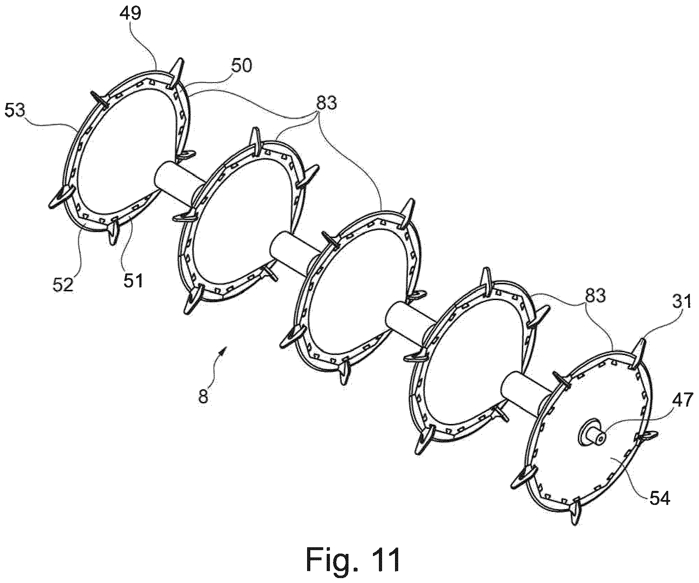

Fig. 11 zeigt eine perspektivische Ansicht der Formrolle der Figur 10. In dieser Ausführungsform sind die Laufstege 83 durch austauschbare Laufplatten 49, 50, 51, 52 gebildet. In dem dargestellten Beispiel sind fünf Laufplatten vorgesehen, die mit einer Tragplatte 54 lösbar verbunden sind. Abhängig von der Ausführungsform können auch mehr oder weniger Laufplatten vorgesehen sein. Zudem können die Laufplatten auch andere Formen aufweisen.

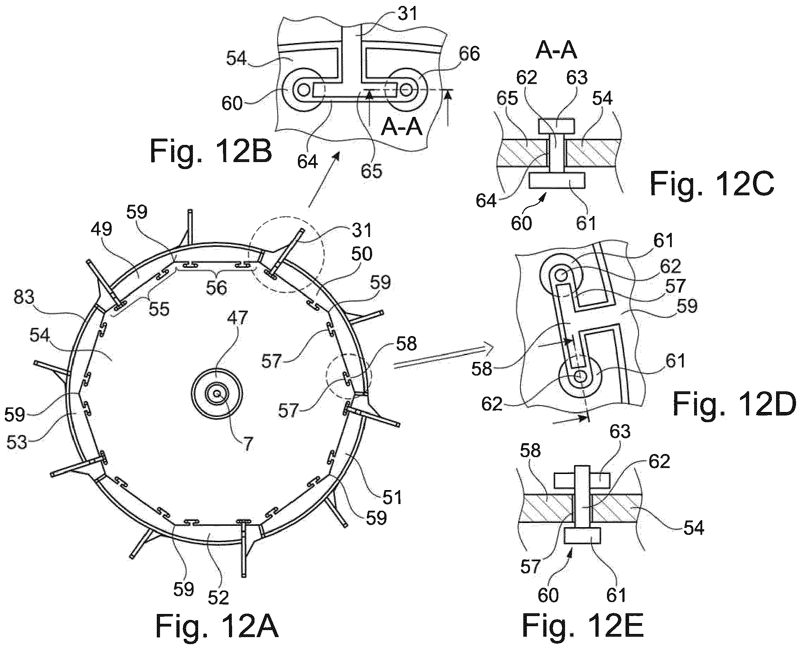

Fig. 12 A zeigt die Draufsicht auf das erste Endstück 47 der Formrolle 8 der Fig. 11. Dabei ist eine Tragplatte 54 zu sehen, die in jedem Randbereich 13, 14 angeordnet sein kann. Die Tragplatte 54 ist fest mit der Formrolle 8 verbunden, beispielsweise mit einem ersten und/oder zweiten Seitenformelement 9, 10. Das erste Endstück 47 ist mit der Tragplatte 54 verbunden. Die Tragplatte 54, sowie auch die übrigen Teile der Formrolle können aus Stahl gebildet sein. Die Tragplatte 54 weist in der dargestellten Ausführungsform eine Scheibenform auf, wobei eine umlaufende Randkontur im Querschnitt senkrecht zur Drehachse 7 gerade Segmentabschnitte 55, 56 aufweist. Die geraden Segmentabschnitte 55, 56 grenzen in einem Abknickpunkt 59 aneinander und bilden einen Winkel. Der Winkel kann z.B. zwischen 130° und 180° liegen. Die Laufplatten sind an der Unterseite analog mit einer abgeknickten Unterseite ausgebildet. Damit sitzt jede Laufplatte formschlüssig in radialer Richtung gesehen auf der Tragplatte auf. Dadurch wird in radialer Richtung eine formschlüssige Verbindung zwischen der Tragplatte und Laufplatte hergestellt, die die Laufplatte sicher an der Tragplatte hält.

Auf der radialen Außenkontur der Tragplatte sind Laufplatten 49, 50, 51, 52, 53 aufgesetzt, wobei die Laufplatten formschlüssig mit der Tragplatte 54 verbunden sind. Dazu weist die Tragplatte 54 Halteausnehmungen 57 auf, die sich radial von der Außenkontur in die Tragplatte erstrecken. Die Halteausnehmungen 57 sind im Querschnitt senkrecht zur Drehachse 7 T-förmig ausgebildet und erstrecken sich über die gesamte Dicke der Tragplatte 54. Die Laufplatten weisen Haltelemente 58 auf, die vorzugsweise T-förmig ausgebildet sind und in den Halteausnehmungen 57 angeordnet sind. Somit sind die Laufplatten in radialer Richtung formschlüssig in der Tragplatte gehalten.

Fig. 12 D zeigt einen vergrößerten Teilausschnitt der Fig. 12 A, wobei die Halteausnehmung 57 und die in der Halteausnehmung angeordnete Haltelement 58 dargestellt sind. Vorzugseise weisen die Tragplatte und das Haltelement eine ähnlich große Dicke in Richtung der Drehachse auf. Das Halteelement 58 ist gegen ein seitliches Herausrutschen aus der Halteausnehmung 57 durch Befestigungsmittel wie z.B. eine Schraubverbindung 60 gesichert. Die Schraubverbindung wird z.B. durch eine Schraube mit einem Stiftkopf 61, einem Stift 62 und einer Schraube 63 gebildet, die auf ein Gewinde des Stiftes 62 aufgeschraubt ist, wie in Figur 12 E dargestellt ist. Der Stiftkopf 61 überdeckt einen Teil des Haltelementes 58 und einen Teil der Tragplatte 54. Der Stift 62 ist durch die Halteausnehmung 57 geführt. Die Schraube 62 überdeckt einen Teil des Haltelementes 58 und einen Teil der Tragplatte 54. Die Schraube 62 und der Stiftkopf sind an gegenüberliegenden Seiten der Tragplatte angeordnet. Abhängig von der gewählten Ausführung können auch andere formschlüssige und/oder kraftschlüssige Verbindungen zwischen der Tragplatte und den Laufplatten ausgebildet sein.

Auch die Ringplatten 33 der Figuren 3 bis 9 können als lösbare Laufplatten analog zu den Figuren 11 und 12 ausgebildet sein, wobei eine Ringplatte wenigstens eine umlaufende lösbare Laufplatte oder mehrere lösbare Laufplatten aufweist, die jeweils nur einen Teil des gesamten Laufsteges darstellen. Somit können auch bei den Formrollen der Figuren 1 bis 9 formschlüssig und lösbar mit einer Tragplatte verbundene Laufplatten analog zu den Figuren 11 und 12 vorgesehen sein.

Die Stechplatten 31 können analog zu den Laufplatten form- und/oder kraftschlüssig mit der Tragplatte 54 verbunden sein. Auf der radialen Außenkontur der Tragplatte sind Stechplatten 31 aufgesetzt, wobei die Stechplatten 31 formschlüssig mit der Tragplatte 54 verbunden sind. Dazu weist die Tragplatte 54 weitere Halteausnehmungen 64 auf, die sich radial von der Außenkontur in die Tragplatte erstrecken. Die weiteren Halteausnehmungen 64 sind im Querschnitt T-förmig ausgebildet und erstrecken sich über die gesamte Dicke der Tragplatte 54. Die Stechplatten 31 weisen weitere Haltelemente 65 auf, die vorzugsweise T-förmig ausgebildet sind und in den weiteren Halteausnehmungen 64 angeordnet sind. Somit sind die Stechplatten 31 in radialer Richtung formschlüssig in der Tragplatte 54 gehalten. Fig. 12 B zeigt einen vergrößerten Teilausschnitt der Fig. 12 A, wobei die weitere Halteausnehmung 64 und das in der weiteren Halteausnehmung 64 angeordnete weitere Haltelement 65 dargestellt sind. Vorzugseise weisen die Tragplatte und das weitere Haltelement 65 eine ähnlich große Dicke in Richtung der Drehachse auf. Das weitere Halteelement 65 ist gegen ein seitliches Herausrutschen aus der weiteren Halteausnehmung 64 durch weitere Befestigungsmittel wie z.B. eine Schraubverbindung 60 gesichert. Die Schraubverbindung wird z.B. durch eine Schraube mit einem Stiftkopf 61, einem Stift 62 und einer Schraube 63 gebildet, die auf ein Gewinde des Stiftes 62 aufgeschraubt ist, wie in Figur 12 C dargestellt ist. Der Stiftkopf 61 überdeckt einen Teil des weiteren Haltelementes 65 und einen Teil der Tragplatte 54. Der Stift 62 ist durch die weitere Halteausnehmung 64 geführt. Die Schraube 62 überdeckt einen Teil des weiteren Haltelementes 65 und einen Teil der Tragplatte 54. Die Schraube 62 und der Stiftkopf sind an gegenüberliegenden Seiten der Tragplatte 54 angeordnet. Abhängig von der gewählten Ausführung können auch andere formschlüssige und/oder kraftschlüssige Verbindungen zwischen der Tragplatte und den Stechplatten ausgebildet sein.

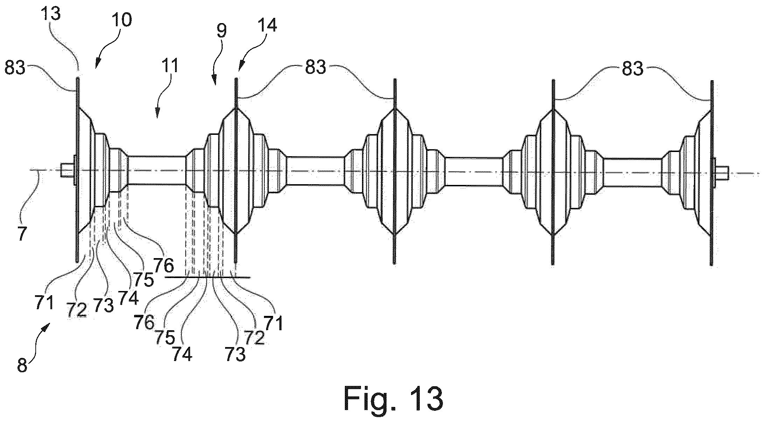

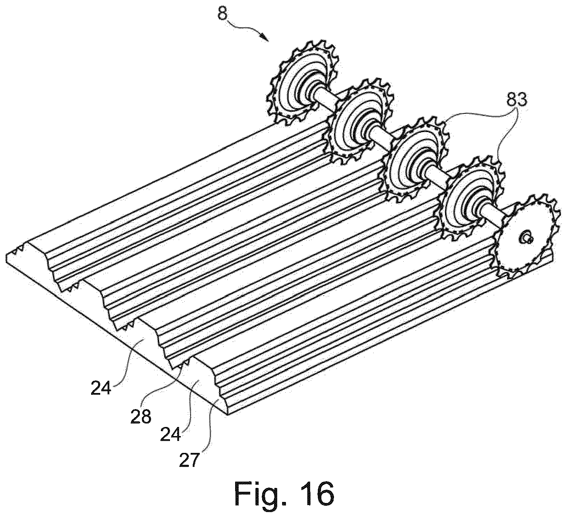

Figur 13 zeigt eine weitere Ausführungsform einer Formrolle, bei der die Seitenformelemente 9, 10 ausgehend von einem Randbereich in Richtung auf den Mittenbereich 11 abgestufte radiale Durchmesser aufweisen. In dem dargestellten Beispiel sind die Seitenformelemente identisch ausgebildet. Abhängig von der gewählten Ausführung können die Seitenformelemente auch verschieden abgestuft sein. Das erste Seitenformelement 9 weist ausgehend vom Randbereich 14 sechs Abschnitte in Richtung des Mittenbereiches 11 auf. Der erste Abschnitt 71 weist einen in Richtung des Mittenbereiches abnehmenden Durchmesser auf. Der zweite Abschnitt 72 weist ebenfalls einen in Richtung des Mittenbereiches abnehmenden Durchmesser auf. Der dritte Abschnitt 73 weist einen konstanten Durchmesser auf. Der vierte Abschnitt 74 weist wieder einen in Richtung des Mittenabschnittes abnehmenden Durchmesser auf. Der fünfte Abschnitt 75 weist einen konstanten Durchmesser auf. Der sechste Abschnitt 76 weist einen in Richtung des Mittenabschnittes abnehmenden Durchmesser auf und geht in den Mittenabschnitt 11 über. Die Länge der Abschnitte können unterschiedlich gewählt werden. Ebenso können die Durchmesser unterschiedlich gewählt werden. Weiterhin können auch die Abnahmen der Durchmesser unterschiedlich gewählt sein. Die einzelnen Abschnitte sind radialsymmetrisch zur Drehachse 7 ausgebildet. Ein Vorteil der entlang der Längsachse gestuft ausgebildeten Seitenformelemente besteht darin, dass entsprechend gestuft ausgebildete Dämme geformt werden, wie in Figur 16 dargestellt ist.

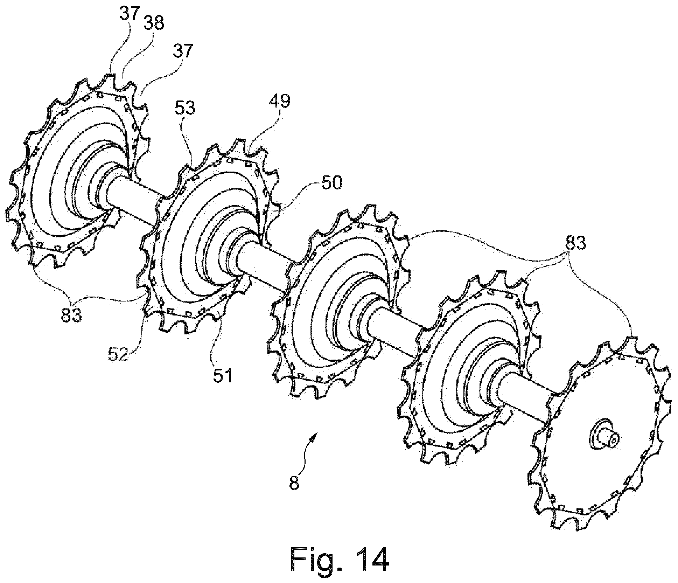

Figur 14 zeigt eine perspektivische Darstellung der Formrolle der Figur 13. Bei dieser Ausführungsform sind in den Randbereichen 13, 14 austauschbare Ringplatten in Form von mehreren Laufplatten 49, 50, 51, 52, 53 ausgebildet. Die Laufplatten sind beispielsweise identisch wie in der Ausführung der Figuren 12 A bis 12 E formschlüssig und lösbar mit der Tragplatte 54 verbunden. In dieser Ausführungsform weisen die Laufplatten Zähne 37 und Zwischenbereiche 38 mit radial zurückgesetzten Einbuchtungen auf. Die Laufplatten 49, 50, 51, 52, 53 können in radialen Außenkanten Schneidflächen aufweisen. Zudem können die Laufplatten auch fest mit der Tragplatte verbunden sein bzw. einstückig und materialeinheitlich mit der Tragplatte ausgebildet sein.

Die Laufplatten können jedoch auch ohne Zähne ausgebildet sein, wie beispielsweise in Figur 3 dargestellt ist.

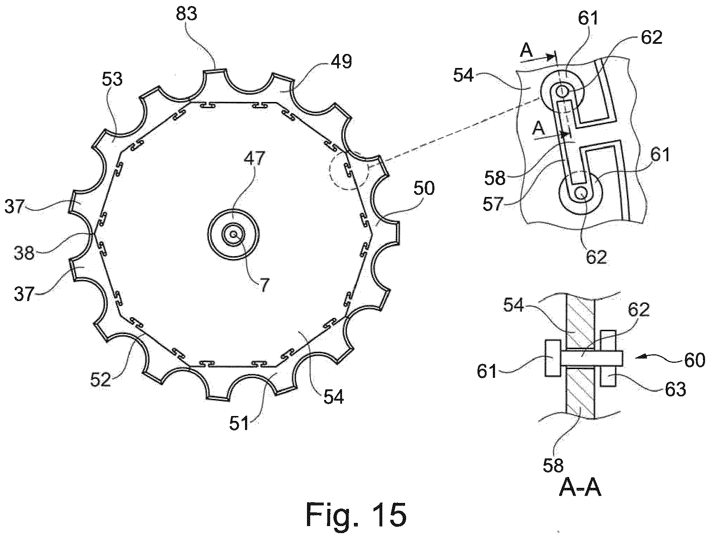

Figur 15 zeigt eine Draufsicht mit einer Darstellung der lösbaren Verbindung der Laufplatten mit der Tragplatte.

Figur 16 zeigt in einer schematischen Darstellung Dämme 24, die mithilfe der Formrolle 8 der Figur 14 und 15 geformt wurden. Dabei sind deutlich die abgestuften Seitenflächen 27, 28 der Dämme 24 zu erkennen.

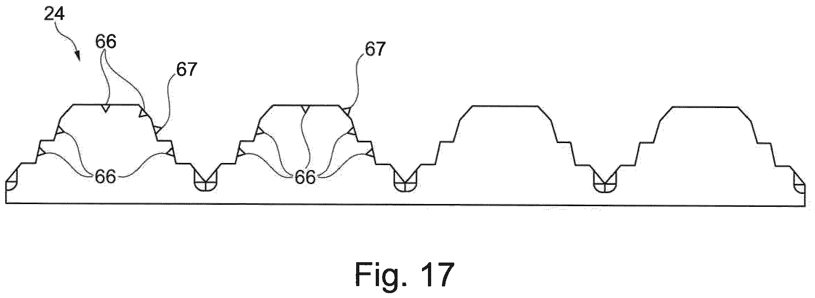

Figur 17 zeigt einen Querschnitt durch Dämme 24, die mit einer abgestuften Formrolle 8 gemäß Figur 13 zeigt, die zudem Stifte, Stege und/oder Ausbuchtungen gemäß der Formrolle der Figur 9 aufweist. Die geformten Dämme 24 weisen zusätzlich zu der Abstufung auch noch weitere Löcher 66 und/oder weitere Ausbuchtungen 67 auf, die durch die Stifte, Stege und/oder Einbuchtungen erzeugt wurden.

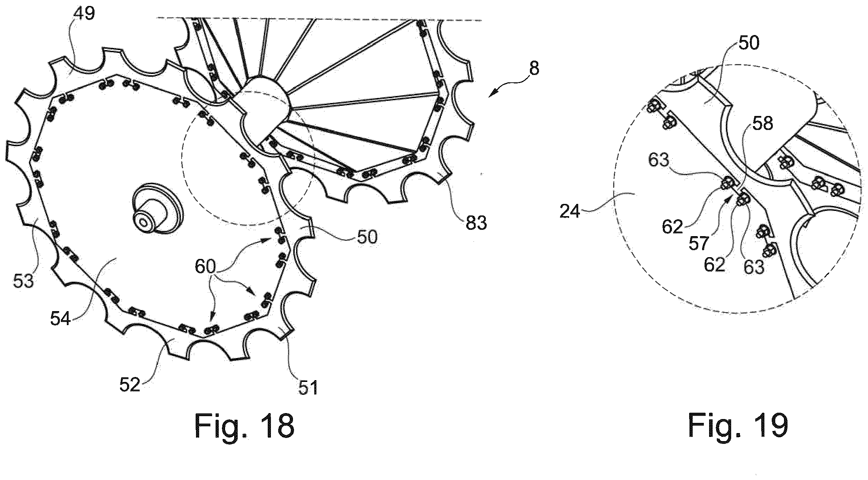

Fig. 18 zeigt eine schematische Teildarstellung einer Formrolle 8 mit Darstellung der formschlüssigen Verbindung der Tragplatte 54 mit den Laufplatten 49-53.

Fig. 19 zeigt eine vergrößerte Teildarstellung der Fig. 18 mit Darstellung der Schraubverbindungen 60, die die Laufplatten 49-53 an der Tragplatte 54 in der Position entlang der Drehachse der Formrolle 8 gesehen in der Ebene der Tragplatte 54 senkrecht zur Drehachse fixieren. Dabei dienen die Schraubverbindungen 60 nur der seitlichen Halterund der Laufplatten 49-53. Die Laufplatten 49-53 sind über das T-förmige Halteelement 58 in der Halteausnehmung 57 gehalten. Vorzugsweise wirkt beim Rollen der Formrolle 8 über den Boden keine oder nur geringe Kräfte auf die Schraubverbindungen 60.

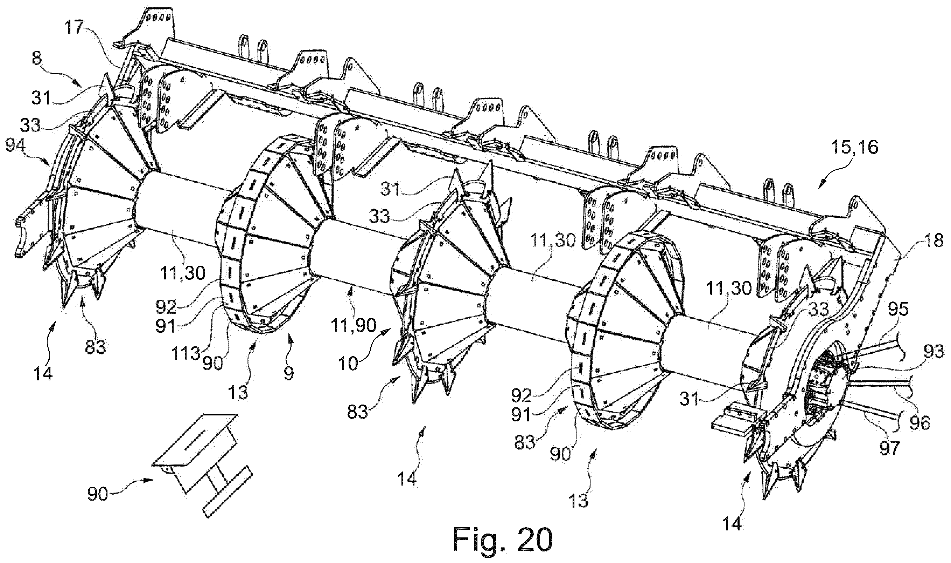

Figuren 20 bis 23 zeigen weitere Ausführungsformen der Formrolle 8.

Figur 20 zeigt eine Ausführungsform der Formrolle 8, bei dem wenigsten ein Laufsteg 83 und/oder eine erster und/oder zweiter Randbereich 13, 14 der Formrolle 8 eine verbreiterte plane Auflagefläche 113 aufweisen. Die plane Auflagefläche 113 wird z.B. mithilfe von weiteren Laufplatten 90, 91, 92 gebildet, die radial umlaufend angeordnet sind. Die Formrolle 8 rollt auf den weiteren Laufplatten 90, 91, 92 auf dem Boden ab. Die planen Auflagenflächen 113 sorgen dafür, dass im Boden 23 keine Vertiefungen oder Einkerbungen oder Löcher 32 beim Abrollen der weiteren Laufplatten 90, 91, 92 erzeugt werden. Die weiteren Laufplatten 90, 91, 92 sind analog zu der ersten bis fünften Laufplatte 48 bis 53 an der Formrolle befestigt, insbesondere austauschbar befestigt. Dazu weist die weitere Laufplatte entsprechende Befestigungselemente auf, die schematisch in einer Detaildarstellung der Figur 20 dargestellt ist. Die weiteren Laufplatten 90, 91, 92 sind beispielsweise als plane Platten ausgebildet und weisen z.B. eine Breite von 4 bis 8 cm und eine Länge von 6 bis 10 cm auf.

Abhängig von der gewählten Ausführungsform können anstelle mehrerer weiterer Laufplatten 90, 91, 92 auch mehrere teilringförmige und/oder eine ringförmige Laufplatte vorgesehen sein, die einen größeren Umfang des ersten bzw. des zweiten Randbereichs 13, 14 überdecken.

Die weiteren Laufplatten 90, 91, 92 sind vorzugsweise austauschbar an der Formrolle befestigt und stellen austauschbare Verschleißelemente dar. Vorzugsweise weist jeder zweite Randbereich 13, 14 der Formrolle 8 entsprechend weitere Laufplatten 90, 91, 92 auf. Auf diese Weise wird jeder zweite Dammgraben 29 ohne Einbuchtungen ausgebildet, sodass dieser Dammgraben einfach zu begehen ist. Insbesondere bei der Saatkartoffelerzeugung werden die wachsenden Saatkartoffeln durch Personen überprüft, wobei die Personen in den Dammgräben jeweils zwischen zwei Kartoffeldämmen laufen und die Bestände nach kranken Pflanzen durchsuchen, um diese auszuziehen und somit an der Knollenbildung zu hindern und aus dem Feld zu entfernen. In den planen Dammgräben kann die Person einfacher laufen.

In der dargestellten Ausführungsform weist jeder zweite Randbereich 13, 14 Stechplatten 31 und Ringplatten 33 bzw. weitere Laufplatten 90, 91, 92 auf. Abhängig von der gewählten Ausführungsform können auch andere Kombinationen von Stechplatten 31, Ringplatten 33 und weitere Laufplatten 90, 91, 92 für die Randbereiche 13, 14 gewählt werden.

Weiterhin können die Formrollen 8 aller Ausführungsbeispiele, wie am Beispiel der Figur 20 dargestellt, wenigstens einen oder zwei Antriebe 93, 94 aufweisen. Die Antriebe 93, 94 sind vorgesehen, um die Formrolle 8 gegenüber dem U-förmigen Träger 15 bzw. den Querträger 16 zu drehen. In der dargestellten Ausführung sind die Antriebe 93, 94 in Endbereichen der Formrolle angeordnet. Beispielsweise können die Antriebe 93, 94 in Form eines hydraulischen Antriebes und/oder eines elektrischen Antriebes ausgebildet sein. In der dargestellten Ausführungsform sind die Antriebe 93, 94 als hydraulische Antriebe ausgebildet. Dazu weisen die hydraulischen Antriebe 93, 94 jeweils einen ersten Anschluss 95 und einen zweiten Anschluss 96 und einen dritten Anschluss 97 auf. Der erste Anschluss 95 dient zur Versorgung des hydraulischen Antriebs mit einem hydraulischen Medium. Der erste Anschluss 95 wird beispielsweise von einem Traktor mit hydraulischem Medium versorgt. Als hydraulisches Medium wird beispielsweise Öl verwendet. Der zweite Anschluss 96 dient als Leckage-Anschluss für eine Rückführung der Leckage am hydraulischen Medium. Der dritte Anschluss 97 dient beispielsweise dazu, um überflüssiges Hydraulikmedium zu einem Medium-Speicher zurückzuführen. Bei der Ausbildung der Antriebe in Form eines hydraulischen Antriebes kann beispielsweise ein Druckhalteventil vorgesehen sein, das einen einstellbaren Druck erzeugt, mit dem der Antrieb die Formrolle 8 mit einem festgelegten Drehmoment in eine Drehbewegung versetzt wird. Abhängig von der gewählten Ausführungsform kann der Druck beispielsweise in Abhängigkeit von der Geschwindigkeit des Traktors geregelt oder gesteuert werden. Die Höhe des Drucks des hydraulischen Antriebes legt fest, mit welchem Drehmoment die Formrolle 8 gedreht wird.

In analoger Weise kann bei der Ausbildung der Antriebe 93, 94 in Form von elektrischen Antrieben durch eine Strom- und/oder Spannungssteuerung das Drehmoment, mit dem die Antriebe 93, 94 die Formrolle gegenüber dem Träger 15 drehen, gesteuert oder geregelt werden. Zudem kann auch bei der Ausbildung als elektrischer Antrieb das Drehmoment des elektrischen Motors in Abhängig von der Geschwindigkeit des Traktors geregelt oder gesteuert werden.

Vorzugsweise erfolgt die Steuerung oder Regelung des oder der Antriebe 93, 94 in der Weise, dass die Drehung der Formrolle 8 im Wesentlichen durch die Antriebe erfolgt und eine Zugmaschine wie beispielsweise ein Traktor im Wesentlichen keine Zugkraft zum Drehen der Formrolle aufbringen muss. Das Drehmoment der Antriebe kann jedoch auch größer oder niedriger eingestellt werden. Für die Steuerung und/oder Regelung der Antriebe sind entsprechende Steuergeräte vorgesehen. Die Steuergeräte können an der Zugmaschine und/oder an der landwirtschaftlichen Maschine angeordnet sein.

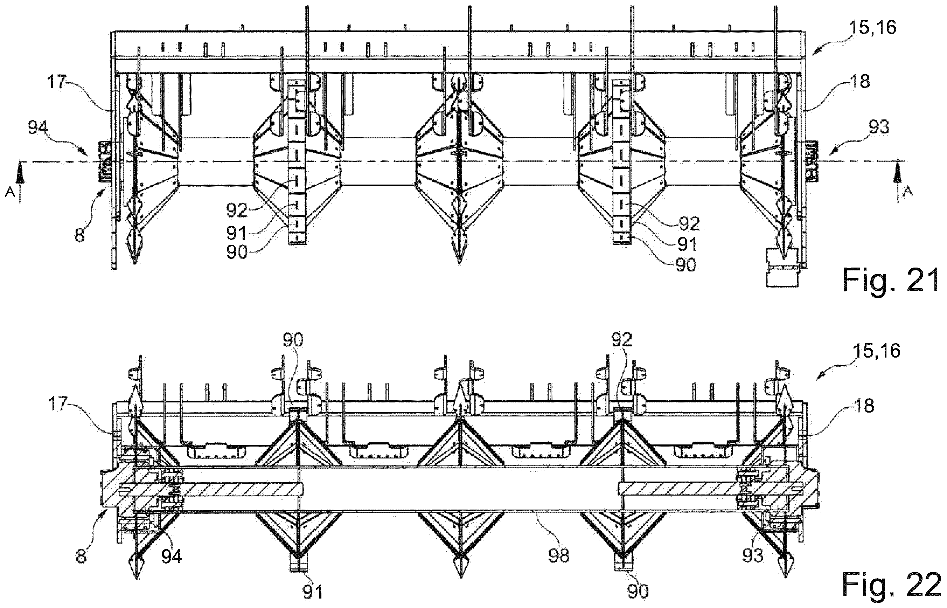

Figur 21 zeigt in einer weiteren schematischen Darstellung die Anordnung der Figur 20. Für eine vereinfachte Darstellung sind die Anordnungen der Figuren 21 und 22 die hydraulischen Anschlüsse nicht dargestellt.

Figur 22 zeigt einen Querschnitt A'A durch die Figur 21. Dabei ist die Anordnung der Antriebe 93, 94 in den gegenüberliegenden Enden der Formrolle 8 zu erkennen. Die Formrolle 8 weist einen durchgehenden Rollenkörper 98 auf, auf dem die Außenkontur der Formrolle 8 angeordnet ist bzw. durch den Rollenkörper 98 gebildet wird. Die Antriebe 93, 94 sind in der Weise angeordnet und ausgebildet, um den Rollenkörper 98 und damit die Formrolle 8 gegenüber dem Träger 15 zu drehen. Somit stützen sich die Antriebe 93, 94 an den Endträgern 17, 18 und dem Rollenkörper 98 ab.

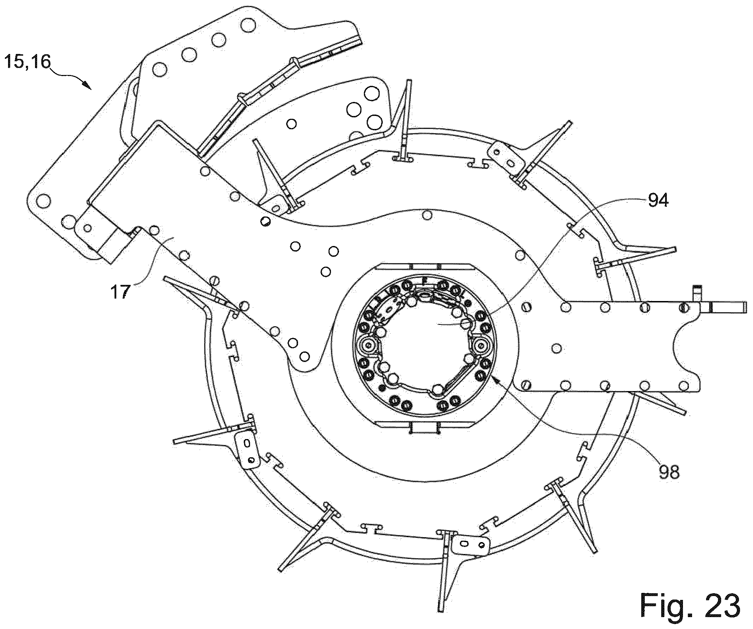

Figur 23 zeigt in einer schematischen Darstellung eine Seitenansicht auf den ersten Endträger 17 mit einer schematischen Darstellung des weiteren Antriebes 94 und des Rollenkörpers 98.

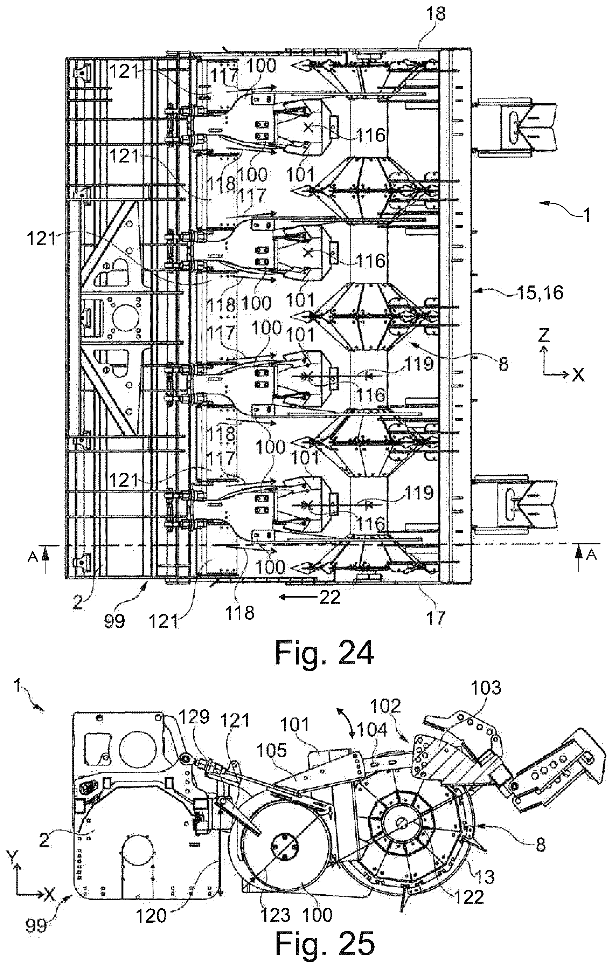

Figuren 24 bis 28 zeigen eine weitere Ausführungsform einer landwirtschaftlichen Maschine 1, die vorzugsweise auf eine Tragrolle 84 (Fig. 2) verzichten kann. Abhängig von der gewählten Ausführungsform kann jedoch auch bei den landwirtschaftlichen Maschinen 1 der Figuren 24 bis 28 eine Tragrolle 84 analog zu Figur 2 angeordnet sein.

Figur 24 zeigt in einer schematischen Draufsicht eine Teildarstellung der landwirtschaftlichen Maschine 1, wobei insbesondere der Vorratsbehälter und dessen Abstützung nicht dargestellt ist. Entgegen der Zugrichtung 22 ist zuerst das Traggestell 2 mit den Auflockerungswerkzeugen 99 wie beispielsweise eine Rotorfräße, eine Egge, eine Scheibenegge, ein Grubber und/oder eine Kreiselegge usw., anschließend Scharen 100 zum Formen eines Legekanals, dann Freihaltebleche 101 zum Freihalten des Legekanals von Bodenmaterial, und dann die Formrolle 8 angeordnet. Die Formrolle 8 kann jede Ausführungsform der in dieser Anmeldung beschriebenen Formen aufweisen und ist nicht auf die in Figur 24 dargestellte Formrolle 8 beschränkt.

Eine Position der Kartoffelablage 116 ist schematisch in Form von Kreuzen dargestellt. Die Kartoffelablage erfolgt im Bereich des Freihalteblechs 101. Das Scheibenschar 100 teilt die Erde zur Kartoffelablage und erzeugt einen Legekanal. Ab der Position der Kartoffelablage 116 soll die Formrolle 8 die Erde wieder zusammenführen. Eine in den Lagekanal an der Position der Kartoffellablage 116 abgelegte Kartoffel sollte möglichst schnell von zwei zusammenlaufenden Erdströmen fixiert, d.h. mit Erde bedeckt und überdeckt werden. In der Zugrichtung sollte ab der Position der Kartoffelablage 116 die Formrolle 8 die vorzugsweise noch in Bewegung befindliche Erde wieder zusammenführen und die abgelegte Kartoffel bedecken.

Schematisch sind an jeder Scheibenschar 100 zwei drehbar gelagerte Scheiben vorgesehen, die in einem Winkel zueinander angeordnet sind und somit zwei Erdströme 117, 118 bilden. Vorzugsweise ist der Abstand 119 der Drehachse der Formrolle 8 von der Position der Kartoffelablage 116 in der Zugrichtung gesehen im Bereich von 375 bis 600 mm. Zudem kann die Formrolle 8 einen radialen Durchmesser im Bereich des ersten und/oder des zweiten Randbereiches 13, 14 von 750 mm bis 1000 mm aufweisen. Der Durchmesser der Scheiben der Scheibenschar 100 kann im Bereich von 400 bis 600 mm liegen.

Figur 25 zeigt eine schematische Seitenansicht der landwirtschaftlichen Maschine 1 im Schnitt A-A der Figur 24. Im dargestellten Ausführungsbeispiel sind als Scharen 100 jeweils zwei Scheibenscharen 100 angeordnet, die einen Legekanal in das von dem Auflockerungswerkzeug aufgelockerte Bodenmaterial formen. In der dargestellten Ausführungsform ist ein Stellelement 102 vorgesehen, mit dem eine relative Tiefenposition der Scharen 100 und vorzugsweise der Freihaltebleche 101 gegenüber der Rolle 8 eingestellt werden kann. Die scharen und die Freihaltebleche sind beispielsweise fest miteinander verbunden und in der Höhenposition relativ zueinander festgelegt.

Das Traggestell 2 ist über feste Verbindungselemente mit dem U-förmigen 15 und dem Querträger 16 verbunden, wobei somit auch die Formrolle 8 in einer starren Höhenposition relativ zum Traggestell 2 angeordnet ist. Die Scharen 100 und sind über das Stellelement 2 in der Höhenposition, d.h. in der Y-Achse, veränderbar gegenüber der Höhenposition der Formrolle 8 und mit der Formrolle 8 verbunden. In dem dargestellten Ausführungsbeispiel ist als Stellelement 102 eine Platte 103 vorgesehen, die mit dem Querträger 16 verbunden ist. Zudem verfügt die Schare100 über ein Halteelement 105 z.B. in Form einer zweiten Platte, an dem die Schar 100 drehbar gelagert ist. Zudem kann das Freihalteblech 101 fest an dem Haltelement 105 befestigt sein. Das Halteelement 105 ist über ein Verbindungselement 104 beispielsweise in Form einer weiteren Platte oder einer Stange mit der Platte 103 verbunden. Sowohl die Platte 103 als auch das Halteelement 105 können verschiedene Befestigungspunkte aufweisen, an denen das Verbindungselement 104 befestigt werden kann. Die Befestigungspunkte sind in der Weise angeordnet, dass sich unterschiedliche Höhenpositionen der Scharen 100 gegenüber der Formrolle 8 ergeben, je nachdem an welchem Befestigungspunkt das Verbindungselement 104 befestigt ist. Beispielsweise können die Befestigungspunkte in Form von Löchern ausgebildet sein, an denen mithilfe von Schraubenbolzen das Verbindungselement 104 befestigt wird.

Die Scharen 100 bzw. das Halteelement 105 sind gelenkig mit dem Traggestell 2 verbunden. Eine Höhenposition der Schar 100 kann somit in der Y-Richtung durch eine entsprechende gewählte Befestigung des Verbindungselements 104 eingestellt werden. Somit kann die Tiefenführung der Schar über das Verbindungselement 104 eingestellt werden. Somit können verschiedene Tiefen von Legekanälen mit der landwirtschaftlichen Maschine 1 erzeugt werden.

Eine Auswurfhöhe 120 des Auflockerungswerkzeuges 99 kann im Bereich von 400 mm bis 700 mm liegen. Zudem kann eine einstellbare, federnd gehalterte Prallschiene 121 vorgesehen sein, die dazu dient, die Flugbahn der ausgeworfenen Erde zu begrenzen. Zudem kann die Formrolle 8 einen radialen Durchmesser 122 im Bereich des ersten und/oder des zweiten Randbereiches 13, 14 von 750 mm bis 1000 mm aufweisen. Der Durchmesser der Scheibe der Scheibenschar 100 kann im Bereich von 400 bis 600 mm liegen.

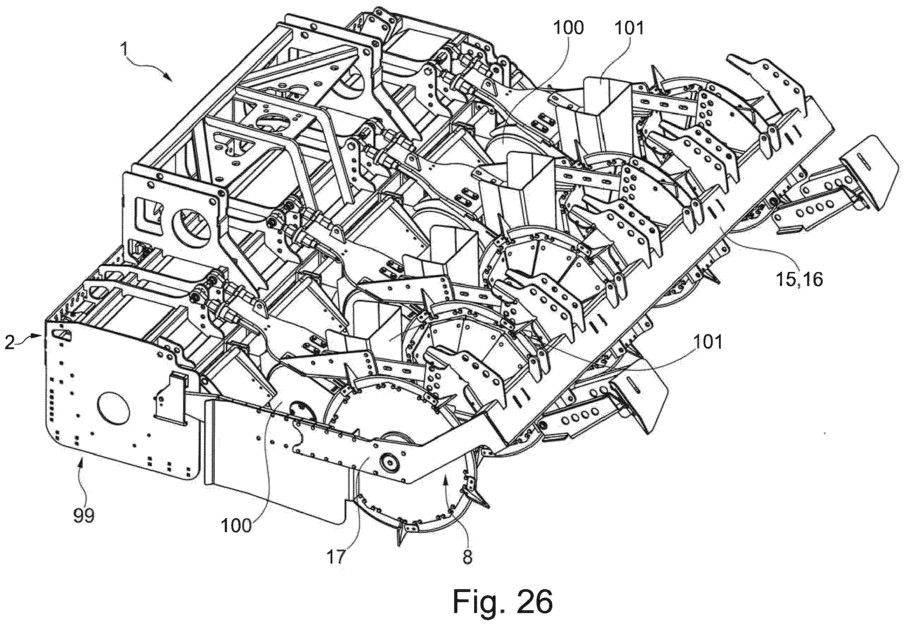

Figur 26 zeigt eine schematische perspektivische Darstellung der landwirtschaftlichen Maschine 1 der Figuren 24 und 25.

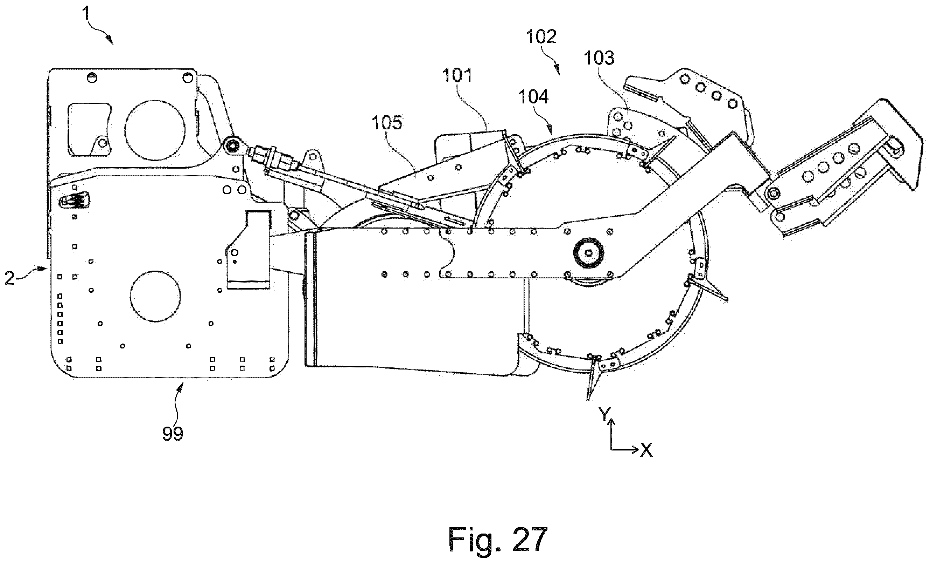

Figur 27 zeigt eine weitere schematische Seitenansicht der landwirtschaftlichen Maschine 1 der Figuren 26. In dieser Darstellung wird das Verbindungselement 104 von der Formrolle 8 verdeckt.

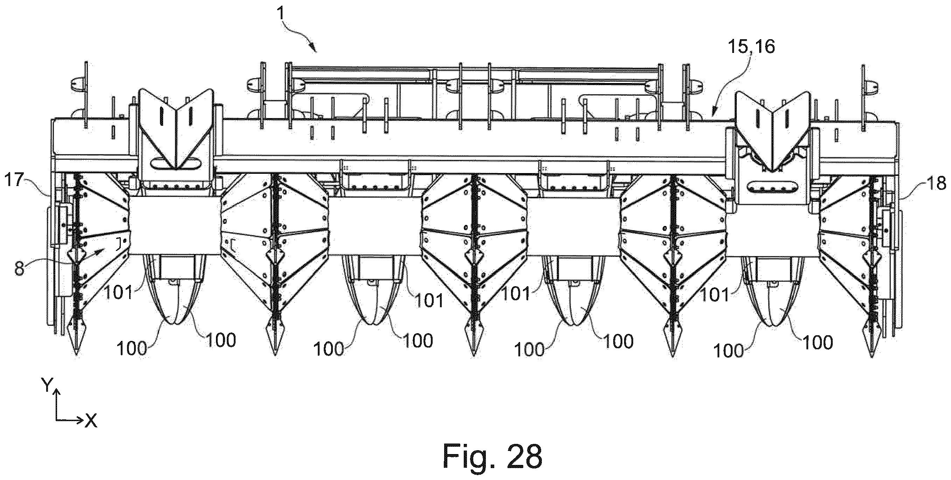

Figur 28 zeigt eine weitere schematische Darstellung der landwirtschaftlichen Maschine 1 der Figur 27 mit einer Draufsicht von der Rückseite.

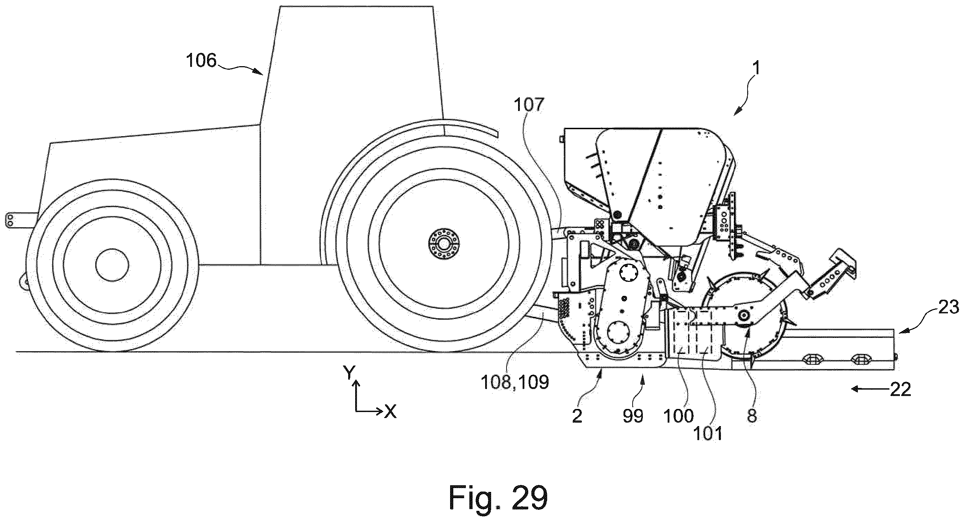

Figuren 29 bis 31 zeigen eine gehobene landwirtschaftliche Maschine 1, bei der die landwirtschaftliche Maschine 1 im Betrieb im Wesentlichen durch die Formrolle 8 auf den Boden abgestützt ist und auf eine Tragrolle 84 wie in dem Ausführungsbeispiel der Figur 2 verzichtet wurde. Die landwirtschaftliche Maschine 1 der Figur 29 kann beispielsweise wie anhand der Figuren 25 bis 28 erläutert ausgebildet sein. Es ist ein Traktor 106 als Zugmaschine vorgesehen, der über eine Hebevorrichtung mit einem Oberlenker 107 und zwei Seitenlenkern 108, 109 die landwirtschaftliche Maschine 1 in der Zugrichtung 22 zieht und gleichzeitig mithilfe der Hebevorrichtung 107, 108, 109 einen Druck auf die landwirtschaftliche Maschine 1 und damit auf die Formrolle 8 in Richtung des Bodens 23, d.h. in der Y-Richtung, ausüben kann.

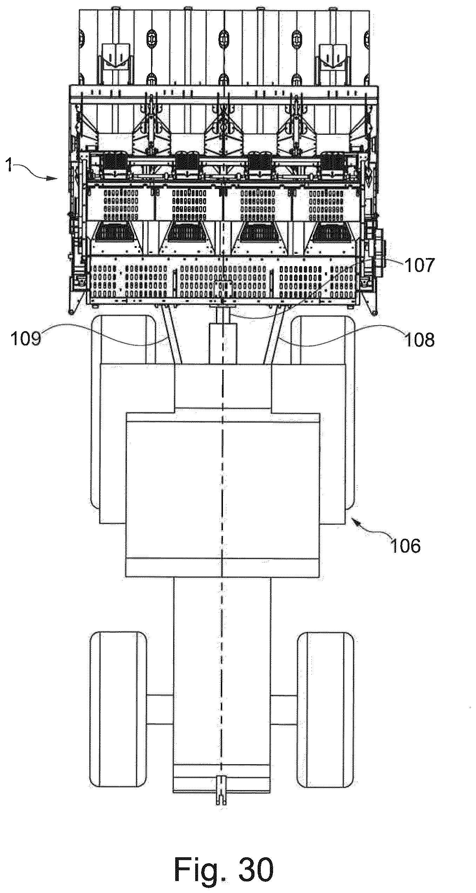

Figur 30 zeigt eine Ansicht der Anordnung der Figur 29 von oben, wobei die landwirtschaftliche Maschine 1 durch eine Hebevorrichtung mit einem Oberlenker 107 und zwei unteren Seitenlenkern 108, 109 gezogen und getragen werden kann. Die unteren Seitenlenker 108, 109 sind mit einer hydraulischen Hebevorrichtung des Traktors 106 verbunden bzw. sind Teile der hydraulischen Hebevorrichtung. Der hydraulische Oberlenker 107 ist ausgebildet, um eine steife Verbindung zwischen dem Traktor 106 und der landwirtschaftlichen Maschine 1 herzustellen.

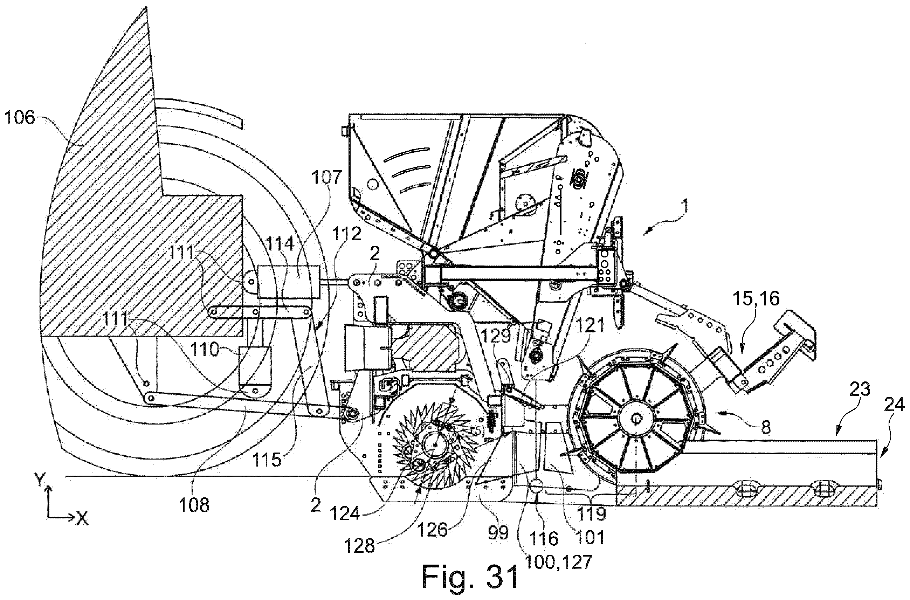

Figur 31 zeigt in einer genaueren Darstellung die Hebevorrichtung 107, 108, 109, die zwischen dem Traktor 106 und der landwirtschaftlichen Maschine 1 ausgebildet ist. Der Oberlenker 107 ist mit einem Ende drehbar am Rahmen des Traktors 1 und mit einem anderen Ende drehbar am Traggestell 2 der landwirtschaftlichen Maschine 1 befestigt. Zudem sind der erste und der zweite untere Seitenlenker 108, 109 jeweils drehbar an einem Rahmen 111 des Traktors 106 und am Traggestell 2 befestigt. Weiterhin ist ein abgewinkelter Haltearm 112 mit einem Ende am Traktor 106 drehbar gelagert und mit dem zweiten Ende drehbar am unteren Seitenlenker 108 befestigt. Der abgewinkelte Haltearm 112 weist einen ersten Arm 114 und einen zweiten Arm 115 auf, die jeweils schwenkbar miteinander verbunden sind. An dem ersten Arm 114, der mit dem Traktor 106 schwenkbar verbunden ist, ist ein Hubzylinder 110 mit einem Ende drehbar befestigt. Ein zweites Ende des Hubzylinders 110 ist mit dem Rahmen des Traktors 106 drehbar verbunden. Der Hubzylinder 110 ist als hydraulischer Hubzylinder ausgebildet und kann sowohl für eine Verkürzung als auch eine Verlängerung mit einer entsprechenden Druckbeaufschlagung gesteuert werden.

In Abhängigkeit von der Druckbeaufschlagung des Hubzylinders 110 wird die landwirtschaftliche Maschine 1 in der Y-Richtung nach oben angehoben oder gegen den Boden 23 nach unten gedrückt. Der Hubzylinder 110 wird abhängig von der gewählten Ausführungsform mit einem gewünschten Druck beaufschlagt, um eine gewünschte Auflagekraft der Formrolle 8 auf dem Boden 23 zu erreichen. Abhängig von der gewählten Ausführungsform kann der Druck im Hubzylinder 106 beispielsweise in Abhängigkeit vom Füllstand des Vorratsbehälters 4 variiert werden, um einen möglichst gleichmäßigen Anpressdruck der Formrolle 8 auf dem Boden 23 zu erreichen. Dadurch wird eine gleichmäßige Formung der Dämme 24 unabhängig vom Füllstand des Vorratsbehälters 4 erreicht. Es können entsprechende Sensoren zur Erfassung des Füllstandes des Vorratsbehälters vorgesehen sein.

Zudem kann ein entsprechendes Steuergerät vorgesehen sein, und eine entsprechende Druckquelle vorgesehen sein, um den Druck im Hubzylinder für eine Längung oder Verkürzung bereitzustellen. Beispielsweise kann auch im Hubzylinder 110 ein Membranspeicher vorgesehen sein, der einen Druckausgleich in vorgegebenen Grenzen ermöglichen kann, um kurzfristige Höhenschwankungen in der Y-Richtung der landwirtschaftlichen Maschine 1 auszugleichen bzw. ein Aufschwingen einer Bewegung der landwirtschaftlichen Maschine 1 in der Y-Richtung zu dämpfen bzw. zu vermeiden.

In der dargestellten Ausführung weist das Auflockerungswerkzeug 99 einen Rotor oder eine Kreiselegge auf. Der Durchmesser 124 des Rotors bzw. der Kreiselegge 99 kann im Bereich von 600 mm bis 800 mm liegen. Zudem ist in dieser Ausführungsform anstelle einer Scheibenschar mit sich drehenden Scheiben eine feststehende Schar 127 mit entsprechend geformten Scharblättern angeordnet. Die Scharblätter der Schar 127 formen im Erdmaterial den Legekanal zum Ablegen des Saatgutes, insbesondere der Kartoffel. An einer Stirnseite, die dem Rotor bzw. der Kreiselegge 99 zugewandt ist, weist die Schar 127 vorzugsweise ein Verschleißteil 126 auf, das mit der feststehenden Schar 127 lösbar, beispielsweise über Schrauben, verbunden ist. Zudem ist oberhalb der Auswurföffnung des Rotors bzw. der Kreiselegge 99 eine Prallplatte 121 vorgesehen, die eine Flugbahn 128 des ausgeworfenen Erdmaterials begrenzt. Eine Winkelposition der Prallplatte 121 kann über eine Drehung um eine Drehachse 129 verändert werden, um die Auswurfhöhe zu verändern. Im Betrieb ist die Winkelposition der Prallplatte 121 fest eingestellt. Zudem kann der Rotor bzw. die Kreiselegge 99 in der Weise ausgebildet sein, dass Erdmaterial in einer Flugbahn 128 in Richtung Schar 127 geworfen wird. Somit kann mithilfe des ausgeworfenen Erdmaterials die Schar 127 von Pflanzenresten und/oder Zwischenfrüchten gereinigt werden. In dieser Ausführungsform kann auf das Freihalteblech verzichtet werden bzw. die Funktion des Freihaltebleches kann von der feststehenden Schar 127 übernommen werden.

Vorzugsweise ist der Abstand 119 der Drehachse der Formrolle 8 von der Position der Kartoffelablage 116 in der Zugrichtung gesehen im Bereich von 375 bis 600 mm. Zudem kann die Formrolle 8 einen radialen Durchmesser im Bereich des ersten und/oder des zweiten Randbereiches 13, 14 von 750 mm bis 1000 mm aufweisen.

### Bezugszeichenliste

- 1: landwirtschaftliche Maschine
- 2: Traggestell
- 3: Pflanzeinrichtung
- 4: Vorratsbehälter
- 5: Entnahmeeinrichtung
- 6: Dammformer
- 7: Drehachse
- 8: Formrolle
- 9: Erstes Seitenformelement
- 10: Zweites Zeitenformelement
- 11: Mittenbereich
- 12: Formelement
- 13: Erster Randbereich
- 14: Zweiter Randbereich
- 15: U-förmiger Träger
- 16: Querträger
- 17: Erster Endträger
- 18: Zweiter Endträger
- 19: Erstes Lager
- 20: Zweites Lager
- 21: Stellelement
- 22: Zugrichtung
- 23: Boden
- 24: Damm
- 25: Pflanzgut
- 26: Oberseite
- 27: Erste Seitenfläche
- 28: Zweite Seitenfläche
- 29: Dammgraben
- 30: Mittenformelement
- 31: Stechplatte
- 32: Loch
- 33: Ringplatte
- 34: Schraubverbindung
- 35: Teilfläche
- 36: Randbereich
- 37: Zahn
- 38: Zwischenbereich
- 39: Schneidkante
- 40: Schneidwinkel
- 41: Eindringtiefe
- 42: Stift
- 43: Steg
- 44: Einbuchtung
- 45: Weiteres erstes Drehlager
- 46: Weiteres zweites Drehlager
- 47: Erstes Endstück
- 48: Zweites Endstück
- 49: Erste Laufplatte
- 50: Zweite Laufplatte
- 51: Dritte Laufplatte
- 52: Vierte Laufplatte
- 53: Fünfte Laufplatte
- 54: Tragplatte
- 55: Erster Segmentabschnitt
- 56: Zweiter Segmentabschnitt
- 57: Halteausnehmung
- 58: Halteelement
- 59: Abknickpunkt
- 60: Schraubverbindung
- 61: Stiftkopf
- 62: Schraubenstift
- 63: Schraube
- 64: Zweite Halteausnehmung
- 65: Zweites Halteelement
- 66: Weiteres Loch
- 67: Weitere Ausbuchtung
- 68: Kammblech
- 69: Ende
- 70: Kammstruktur
- 71: 1. Abschnitt
- 72: 2. Abschnitt
- 73: 3. Abschnitt
- 74: 4. Abschnitt
- 75: 5. Abschnitt
- 76: 6. Abschnitt
- 81: 1. Abschnitt Traggestell
- 82: 2. Abschnitt Traggestell
- 83: Laufsteg
- 84: Tragrolle
- 90: weitere erste Laufplatte
- 91: weitere zweite Laufplatte
- 92: weitere dritte Laufplatte
- 93: Antrieb
- 94: weitere Antrieb
- 95: erster Anschluss
- 96: zweiter Anschluss
- 97: dritter Anschluss
- 98: Rollenkörper
- 99: Auflockerungswerkzeug
- 100: Schare
- 101: Freihalteblech
- 102: Stellelement
- 103: Platte
- 104: Verbindungselement
- 105: Halteelement
- 106: Traktor
- 107: Oberlenker
- 108: erster unterer Seitenlenker
- 109: zweiter unterer Seitenlenker
- 110: Hubzylinder
- 111: Rahmen Traktor
- 112: Haltearm
- 113: plane Auflagefläche
- 114: erster Arm
- 115: zweiter Arm
- 116: Position Kartoffelablage
- 117: 1. Erdstrom
- 118: 2. Erdstrom
- 119: Abstand
- 120: Auswurfhöhe
- 121: Prallplatte
- 122: Durchmesser Formrolle
- 123: Durchmesser Scheibenschar
- 124: Durchmesser Rotor

- 126: Verschleißteil
- 127: feststehende Schar
- 128: Flugbahn
- 129: Drehachse

## Patentansprüche

1. Landwirtschaftliche Maschine (1) , mit einem Dammformer (6) zum Aufbau eines Dammes (24) aus Bodenmaterial, wobei der Dammformer (6) eine um eine Drehachse (7) drehbar gelagerte Formrolle (8) aufweist, wobei die Formrolle (8) mehrere entlang der Drehachse (7) nebeneinander angeordnete Formelemente (12) aufweist, wobei ein Formelement (12) entlang der Drehachse (7) ein erstes und ein zweites Seitenformelement (9, 10) aufweist, wobei ausgehend von einem ersten Randbereich (13) des Formelementes (12) ein radialer Durchmesser des ersten Seitenformelementes (9) entlang der Drehachse (7) in Richtung auf einen Mittenbereich (11) des Formelementes (12) wenigstens abschnittweise abnimmt, wobei ausgehend vom Mittenbereich (11) entlang der Drehachse (7) ein radialer Durchmesser des zweiten Seitenformelementes (10) in Richtung auf einen zweiten Randbereich (14) des Formelementes (12) wenigstens abschnittweise zunimmt, wobei die seitlichen Randbereiche der Formelemente (12) Laufstege (83) darstellen, wobei die Laufstege (83) ausgebildet sind, um wenigstens teilweise auf dem Boden aufzuliegen, wobei die Laufstege (83) beim Bewegen der Maschine (1) durch Auflage auf dem Boden die Formrolle (8) um die Drehachse (7) drehen, wobei die zwei Seitenformelemente (9,10) eines Formelementes (12) ausgebildet sind, um durch das Drehen der Formrolle (8) und das Bewegen der Formrolle (8) gegenüberliegende Seitenflächen (27, 28) eines Dammes (24) aus Bodenmaterial zu formen.

2. Maschine nach Anspruch 1, wobei die Laufstege (83) wenigstens abschnittsweise eine Schneidkante (39) aufweisen, wobei die Schneidkante (39) beim Rollen der Formrolle (8) in den Boden schneidet und Bodenmaterial und/oder Pflanzenmaterial zerkleinert.

3. Maschine nach einem der vorhergehenden Ansprüche, wobei an einem Laufsteg (83) wenigstens eine Stechplatte (31) angeordnet ist, wobei die Stechplatte (31) radial über den Laufsteg (83) hinausragt, wobei die Stechplatte (31) beim Rollen der Formrolle (8) auf dem Boden in den Boden geschoben wird und ein Loch im Boden zwischen zwei Dämmen (24) erzeugt, wobei insbesondere die Stechplatte (31) eine Keilform aufweist, deren Breite in radialer Richtung bezogen auf die Drehachse (7) abnimmt, und/oder wobei insbesondere die Stechplatte (31) lösbar und austauschbar an der Formrolle (8) befestigt ist.

4. Maschine nach einem der vorhergehenden Ansprüche, wobei ein Traggestell (2) vorgesehen ist, wobei das Traggestell (2) einen ersten Abschnitt (81) und einen zweiten Abschnitt (82) aufweist, wobei der erste Abschnitt (81) zur Befestigung an einer Zugmaschine vorgesehen ist, wobei der zweite Abschnitt (82) schwenkbar am ersten Abschnitt (81) gelagert ist, wobei die Formrolle (8) am zweiten Abschnitt (82) drehbar gelagert ist, wobei zwischen dem ersten Abschnitt (81) und dem zweiten Abschnitt (82) ein Stellelement (21) vorgesehen ist, das ausgebildet ist, um eine Vorspannkraft auf den zweiten Abschnitt (82) auszuüben, wobei insbesondere der zweite Abschnitt (82) einen U-förmigen Träger (15) aufweist, wobei insbesondere der U-förmige Träger (15) einen Mittenabschnitt (16) und zwei abgewinkelten Endabschnitte (17, 18) aufweist, wobei insbesondere die Formrolle (8) mit Drehlagern (45, 46) in den Endabschnitten (17, 18) gelagert ist, wobei sich insbesondere der Mittenabschnitt (16) entlang der Formrolle (8) erstreckt, und wobei das Stellelement (21) vorzugsweise am Mittenabschnitt (16) befestigt ist.

5. Maschine nach einem der vorhergehenden Ansprüche, wobei die Seitenformelemente (9, 10) ausgehend von einem Randbereich (13) in Richtung auf einen Mittenbereich (11) des Formelementes (12) eine abgestufte Oberfläche aufweisen, um Dämme mit abgestuften Seitenflächen (27, 28) zu formen.

6. Maschine nach einem der Ansprüche 1 bis 4, wobei die Seitenformelemente (9, 10) keilförmige Teilflächen (35) aufweisen, wobei die Teilflächen (35) mit einer Längserstreckung entlang der Drehachse (7) ausgerichtet sind.

7. Maschine nach einem der vorhergehenden Ansprüche, wobei wenigstens ein Laufsteg (83) wenigstens einen in radialer Richtung ausgerichteten Zahn (37) aufweist, und wobei insbesondere Zwischenbereiche (38) zwischen den Zähnen (37) eine V-Form oder eine Teilkreisform aufweisen, und/oder wobei die Seitenformelemente (9,10) und/oder die Mittenformelemente (30) auf einer radialen Außenfläche Stifte (42), Stege (43) und/oder Vertiefungen (44) aufweisen, um beim Formen des Dammes (24) Unebenheiten und/oder Vertiefungen und/oder Erhöhungen und/oder Strukturen in eine Oberfläche des Dammes (24) einzubringen.

8. Maschine nach Anspruch 7, wobei die Stege (43) und/oder Vertiefungen (44) so ausgebildet sind, dass an Seitenflächen (27, 28) des Dammes (24) terrassenartige Teilabschnitte abgeformt werden.

9. Maschine nach einem der vorhergehenden Ansprüche, wobei seitliche Randbereiche (13, 14) der Formelemente (12) lösbare Ringplatten (33) und/oder lösbare Laufplatten (49-53) aufweisen, die Laufstege (83) der Formrolle (8) darstellen, wobei insbesondere die Ringplatte (33) und/oder die Laufplatten (49-53) formschlüssig mit der Formrolle (8), insbesondere mit einer Tragplatte (54) der Formrolle (8) verbunden sind, und wobei insbesondere die Ringplatte (33) und/oder die Laufplatten (49-53) mithilfe einer Schraubverbindung (60) an der Formrolle (8) gesichert sind.

10. Maschine nach einem der vorhergehenden Ansprüche, wobei an wenigstens einem Laufsteg (83) wenigstens eine weitere Laufplatte (90, 91, 92) angeordnet ist, wobei die weitere Laufplatte (90, 91, 92) eine Auflage auf dem Boden (23) ermöglicht, ohne eine wesentliche Vertiefung im Boden zu erzeugen, und wobei insbesondere die Laufplatte (90, 91, 92) austauschbar an der Formrolle (8) befestigt ist und insbesondere ein austauschbares Verschleißteil darstellt, wobei insbesondere im radialen Umfang an dem Laufsteg (83) mehrere weitere plane Laufplatten (90, 91, 92) angeordnet sind, die eine umlaufende Lauffläche mit Querkanten darstellen.

11. Maschine nach einem der vorhergehenden Ansprüche, wobei die Formrolle (8) wenigstens einen Antrieb (93, 94) zum Drehen der Formrolle (8) aufweist, wobei insbesondere eine Drehgeschwindigkeit und/oder ein Drehmoment des Antriebes (93, 94) steuer- oder regelbar abhängig von einem Parameter, insbesondere abhängig von einer Zuggeschwindigkeit der Maschine ist.

12. Maschine nach einem der vorhergehenden Ansprüche, wobei Stellelemente vorgesehen sind, mit denen eine Tiefenführung eines Mittels (100, 101) zum Ausbilden eines Legekanals für Saatgut, insbesondere Kartoffeln, veränderbar ist, wobei insbesondere eine Tiefenführung einer Schar veränderbar ist, und/oder wobei ein Halteelement vorgesehen ist, mit dem die Maschine (1) in Richtung Boden mit Druck beaufschlagbar ist.

13. Maschine nach einem der vorhergehenden Ansprüche, wobei ein Mittel (100, 101) zum Ausbilden eines Legekanals für Saatgut, insbesondere Kartoffeln, und die Formrolle (8) in der Weise ausgebildet und angeordnet sind, dass beim Legen des Saatgutes ein überwiegender Teil des Erdmaterials, das vom Mittel (100, 101) zum Ausbilden des Legekanals in Bewegung versetzt wird, in Bewegung bleibt, bis die Formrolle (8) aus dem sich bewegenden Erdmaterial einen Damm (24) bildet.

14. Maschine nach Anspruch 13, wobei ein Auflockerungswerkzeug (99), das in Fahrtrichtung vor dem Mittel (100, 101) zum Ausbilden des Legekanals vorgesehen ist, das Erdmaterial durch die Auflockerung in Bewegung versetzt, und wobei das Auflockerungswerkzeug (99) und das Mittel (100, 101) zum Ausbilden des Legekanals in der Weise angeordnet und ausgebildet sind, dass ein überwiegender Teil des vom Auflockerungswerkzeug (99) in Bewegung versetzte Erdmaterial in Bewegung bleibt, bis das Mittel (100, 101) zum Ausbilden des Legekanals wenigstens teilweise aus dem in Bewegung befindlichen Erdmaterial den Legekanal formt.

15. Maschine nach einem der vorhergehenden Ansprüche, wobei die Maschine keine Tragrolle (84) aufweist und sich insbesondere im Wesentlichen mit der Formrolle (8) auf dem Boden (23) abstützt, wobei insbesondere die Maschine als Hebemaschine ausgebildet ist, und wobei insbesondere die Maschine kein Rad aufweist.
